# EUROPÄISCHE PATENTSCHRIFT

(11) **EP 2 674 245 B1**
(45) Veröffentlichungstag und Bekanntmachung des Hinweises auf die Patenterteilung: **24.07.2019**
(21) Anmeldenummer: 12172142.7
(22) Anmeldetag: 15.06.2012
(51) Int. Cl.: B23Q 1/48, B23K 26/08, B23K 37/02, B26F 3/00

(54) **Strahlbearbeitungsvorrichtung**
Jet processing device
Dispositif de traitement par rayonnement

(43) Veröffentlichungstag der Anmeldung: 18.12.2013
(73) Patentinhaber: Bystronic Laser AG, 3362 Niederönz (CH)
(72) Erfinder: Bossoni, Sergio, 8048 Zürich (CH); Wüthrich, Matthias, 4900 Langenthal (CH); Seiler, Thomas, 3661 Uetendorf (CH); Fink, Benjamin, 4917 Melchnau (CH)
(74) Vertreter: Schwarz und Baldus Patentanwälte

(56) Entgegenhaltungen:
- EP-A2- 0 472 378
- DE-A1- 10 010 574
- JP-A- 2004 202 542

## Beschreibung

Die Erfindung betrifft eine Strahlbearbeitungsvorrichtung, insbesondere eine Laserstrahl-Bearbeitungsvorrichtung oder eine Fluidstrahl-Bearbeitungsvorrichtung, zur Bearbeitung eines Werkstückes mit einem Strahl, gemäss dem Oberbegriff von Anspruch 1.

Die US7767932B2 zeigt eine Laserbearbeitungsvorrichtung mit einem Multi-Achsensystem. Eine lineare R-Achse sitzt auf einer Drehachse (W-Achse). Der Laserbearbeitungskopf sitzt am Ende einer Spindel und wird In seiner radialen Lage verändert. Ein entgegengesetzt verfahrbares Gegengewicht kompensiert die Lageanderung des Laserbearbeitungskopfes entlang der linearen R-Achse. Eine Einschränkung dieser Vorrichtung stellt nicht nur die fehlende Möglichkeit einer vollständigen Umdrehung um die Drehachse (W-Achse), denn es ist nur eine segmentweise Drehung vorgesehen, sondern auch die komplexe Zuführung des CO₂-Laserstrahls über fliegende Optiken In den Laserbearbeitungskopf dar. Die Zuführung erfordert zusammenwirkende drehende und stationäre Konstruktionen, dies auch zum Ausgleich des Gasvolumens Im Strahlengang (balgförmige Zuführung). Dies macht die Vorrichtung kostspielig und fehleranfällig. Ein grosser Nachteil dieser Konstruktion besteht darin, dass der Laserbearbeitungskopf nicht nahe genug an die Drehachse (W-Achse) gebracht werden kann, da dorf. der Antrieb sitzt. Der auf der linearen R-Achse angeordnete Antrieb zum Antreiben der linearen R-Achse dreht immer mit, d.h. auch die Zuleitungen sind anfällig für Verdrillung.

Die JP2004 202542A offenbart eine Laserbearbeitungsvorrichtung mit den Merkmalen des Oberbegriffs des Anspruchs 1. JP2004 202542A offenbart eine Laserbearbeitungsmaschine mit einem positionierbaren Laserbearbeitungskopf, der entlang einer Kreislinie bewegbar ist. Damit die zuführende Laserfaser nicht verdrillt, ist der obere Teil des Laserbearbeitungskopfes in einer Art Führung derart gelagert, dass er nicht drehen kann, während eine translatorische Bewegung In den Richtungen - in dieser Schrift als H1 und H2 bezeichnet- möglich ist. Der untere Teil des Laserbearbeitungskopfes und der obere Teil des Laserbearbeitungskopfes sind dabei gegeneinander verdrehbar gelagert. Dies erfordert eine aufwändige und teure Konstruktion, die zusätzlich anfällig für zwischen den beweglichen Teilen eindringende Verschmutzungen jeglicher Art ist. Die Linse dreht bei dieser Lösung relativ zum Laserfaserstecker, was zu Ungenauigkeiten In der Strahlachse führt. Ausserdem wird der Laserbearbeitungskopf relativ zur Strahlachse geschwenkt, wodurch keine gleichmässigen Schnitte senkrecht zum Blech erfolgen können (wechselnde Winkel der Schnittkante).

Andere Lösungen zur Verhinderung einer gegenüber der Arbeitsfaser torsionsbelastender Laserfaser-Verdrillung bzw. -Verwicklung schlagen vor, die Laserleitfaser mittels einer an der Oberseite des Laserbearbeitungskopfes verdrehbar gelagerten Verbindungshülse an diesen anzubinden, z.B. die CN201622368U, JP2000158174A. Ein drehendes Element in der Strahlachse zu integrieren bringt aber folgende Nachteile bzw. Gefahren: (1) Verschmutzung durch Abrieb von Dichtungen, (2) Erwärmung und daraus resultierende störende Deformationen, (3) Ungenauigkeiten durch fertigungstechnische Toleranzen und (4) Verschlechterung der Strahlabbildung. Ausserdem werden derartige Lösungen als limitierend für die Dynamik betrachtet bzw. es ist mit einer begrenzten maximalen Drehzahl zu rechnen.

Die EP0472378A2 löst das Problem der Zuführung des Laserstrahls Im Zusammenhang mit einem polaren Antrieb durch eine teleskopierbare Führung bzw. Halterung mit Umlenkspiegeln.

Die KR100800565B1 beschreibt einen mehrgliedrigen Arm für die Laserzuleitung. In den Gelenken verlaufen die Zuleitungen achsparallel.

Der Nachteil der letzteren Lösungen sowie z.B. auch der Lösung gemäss DE102008032830A1 bestehen In der sehr aufwendigen und fehleranfälligen Konstruktion, da Düse und die Abstandselektronik mit dem letzten Spiegel mitbewegt werden müssen, um Schneidgas mit hohem Durchfluss und Druck für Schmelzschneldprozess Im Fokuspunkt bereitstellen zu können. Die Nachteile dieser bekannten Lösung bestehen insbesondere in den beweglichen Teilen Im Strahlengang, der Verschmutzung, den Ungenauigkeiten, der Vielzahl an optischen Elementen, den hohen Anforderungen an die zu bewegenden Spiegel, den hohen Kosten, der Gefahr von negativer Beeinflussung der Strahlabbildung und Strahlführung sowie dem hohen Gewicht.

Weitere bereits weiter abliegende Konstruktionen sind den Druckschriften DE10010574A1, DE19804305C1, JP3128183A, JP5337673A und JP2004202542A zu entnehmen.

Antriebe mit rotatorischen Freiheitsgraden welsen das Problem auf, dass die Zuleitung, z.B. Laserfaser, Fluidleitung, elektrische Versorgung, Steuerleitungen, etc., während einer Drehung aufgewickelt bzw. verdrillt werden.

Aufgabe der vorliegenden Erfindung Ist es, eine Strahlbearbeitungsvorrichtung bereitzustellen, die die erwähnten Nachteile nicht aufweist und insbesondere ein torsionsbelastenendes Verdrillen einer Zuleitung zum Strahlbearbeitungskopf zuverlässig verhindert. Die Lösung soll eine exakte Lagepositionierung des Strahlbearbeitungskopfes unabhängig von der Zuleitung gewährleisten. Ausserdem soll die Konstruktion derart beschaffen sein, dass der Strahlbearbeitungskopf einschliesslich Zuleitung (z.B. Laserfaser) keine gegeneinander verdrehbare Teile aufweisen muss.

Die zuvor definierte Aufgabe wird mit einer Strahlbearbeitungsvorrichtung der eingangs genannten Art durch Realisierung der Merkmale des unabhängigen Anspruchs 1 gelöst. Weitere optionale Merkmale folgen aus den abhängigen Ansprüchen und der nachfolgenden Beschreibung.

Der Strahlbearbeitungskopf weist relativ zur zweiten Plattform einen rotatorischen Freiheitsgrad R2 um eine zweite Rotationsachse auf, die Im Wesentlichen parallel zur ersten Rotationsachse des rotatorischen Freiheitsgrades R1 der zweiten Plattform relativ zur ersten Plattform ist und im Wesentlichen mit der Strahlaustrittsachse zusammenfällt.

Durch diese Massnahme wird der Strahlbearbeitungskopf - auch bei einer Drehung um die erste Rotationsachse - nicht gezwungen, seine Orientierung relativ zur ersten Plattform zu verändem. Die Orientierung einer im Laserbearbeitungskopf mündenden Zuleitung relativ zur ersten Plattform bleibt daher weitgehend unverändert. Ein Verdrillen oder Verdrehen der Zuleitung wird so verhindert und damit Beschädigungen durch den Betrieb ausgeschlossen. Weiters umfasst gemäss der vorliegenden Erfindung die Strahlbearbeitungsvorrichtung eine Verdrehsicherung für den Strahlbearbeitungskopf, die eine Verdrehung des Strahlbearbeitungskopfes relativ zur ersten Plattform oder zu einer mit der ersten Plattform drehtest verbundenen Basisplattform um seine Strahlaustrittsachse begrenzt und vorzugsweise vollstandig verhindert. Alternativ bildet sich bereits durch die Trägheit des Strahlbearbeitungskopfes und durch eine gewisse Steifigkeit der Zuleitung ein Widerstand gegen Verdrehung aus. Weit zuverlässiger kann dies aber durch eine gesonderte Verdrehsicherung bewirkt werden.

Ein wesentliches Merkmal ist auch dadurch gegeben, dass die zweite Plattform und/oder der Strahlbearbeitungskopf relativ zur ersten Plattform zusätzlich zum rotatorischen Freiheitsgrad zumindest einen translatorischen Freiheitsgrad aufweist, der quer zur ersten Rotationsachse des rotatorischen Freiheitsgrades verläuft. Dies ermöglicht einen vollständigen polaren Antrieb mit einer Vielzahl an Strahlbearbeitungskopf-Stellungen. Dabei ist die zweite Plattform zusammen mit dem Strahlbearbeitungskopf auf einer Zwischenplattform translatorisch - entlang einer Linearachse - verschiebbar oder der Strahlbearbeitungskopf als solcher ist entlang der zweiten Plattform translatorisch - entlang der Linearachse - verschiebbar. In einer möglichen, nicht abschliessenden Variante befindet sich der translatorische Freiheitsgrad (T1) in kinematischer Sicht zwischen dem rotatorischen Freiheitsgrad (R1) der zweiten Plattform und dem rotatorischen Freiheitsgrad (R2) des Strahlbearbeitungskopfes.

Die erfindungsgemässe Lösung ist besonders bei einem faserähnlichen Übertragungsmedium für den Laserstrahl (in Fachkreisen auch als Arbeitsfaser oder Sekundärfaser bezeichnet) vorteilhaft. Faserlaser, welche faserähnliches Übertragungsmedium aufweisen können, erlauben vorteilhaft bei der Bearbeitung von Dünnblech mit hohen Schnittgeschwindigkeiten zu fahren. Die durch die erfindungsgemässe Lösung geschaffene Lagepositionierung des Strahlbearbeitungskopfes hat somit wesentliche Vorteile für die resultierende Schnittqualität und Dynamik.

Die Erfindung Ist jedoch nicht auf einen Einsatz mit Faserlaser eingeschränkt, sondern bezieht sich vielmehr auf Strahlbearbeitungsvorrichtungen, bei denen eine Zuleitung (z.B. Laserstrahlzuleitung oder Fluidzuleitung) In den Strahlbearbeltungskopf einmündet. Bei Laserbearbeitungsvorrichtungen also z.B. mit Laserquellen, deren Licht mittels Lichtleitkabel zum Arbeitspunkt geführt werden kann.

Zum Vorteil der höheren Schnittgeschwindigkeiten im Dünnblech von Faserlaser gegenüber CO₂-Laser wird ergänzend, aber nicht einschränkend ausgeführt, dass erstere wegen dem Im Dünnblech (unter 4mm) besseren Absorbtionsverhalten verschiedener metallischer Werkstoffe für Laserlicht mit Wellenlängen im Bereich von 1 Mikrometer - wie es z.B. von Faserlaser, Scheibenlaser und Diodenlaser erzeugt wird - gegenüber Laserlicht mit Wellenlängen im Bereich von 10 Mikrometern - wie es von CO₂-Lasern erzeugt wird, bevorzugt eingesetzt werden. Dadurch kann Im Dünnblech im Schmelzschnitt mit geringeren Laserleistungen eine höhere Schneidgeschwindigkeit erreicht werden (weitere Einflussfaktoren sind: geringerer Fokusdurchmesser und dadurch höhere Energiedichte und weitere). Mit einer höheren fahrbaren Schnittgeschwindigkeit bringt eine höhere Beschleunigung mehr Produktivität.

Der Strahlbearbeitungskopf kann die Einmündung der Zuleitung, die Strahlaustrittsöffnung und zumindest den gesamten Abschnitt zwischen der Einmündung der Zuleitung und der Strahlaustrittsöffnung umfassen. Die Einmündung der Zuleitung kann axial zur Strahlaustrittsachse orientiert oder aber auch seitlich angeordnet sein.

Bei einer Fluidstrahl-Bearbeitungsvorrichtung ist das Fluid beispielsweise Wasser, welches aus dem Strahlbearbeitungskopf entlang einer Strahlaustrittsachse austritt. Die Erfindung umfasst demnach auch Wasserstrahl-Schneidmaschinen.

Vorzugsweise ist die Zuleitung drehfest mit dem Strahlbearbeitungskopf verbunden. Dies Ist die einfachste Art der Anbindung.

Bevorzugt ist der rotatorische Freiheitsgrad (R2) des Strahlbearbeitungskopfes relativ zur zweiten Plattform ein passiver, d. h. nicht angetriebener, Freiheitsgrad. Dies bedeutet, dass kein eigener Antrieb zur Erhaltung der Orientierung des Strahlbearbeitungskopfes relativ zur ersten Plattform vorgesehen werden muss, der die Drehung um die erste Rotationsachse ständig z. B. durch eine gegensinnige Drehung kompensiert.

Bevorzugt ist der translatorische Freiheitsgrad (T1) durch eine Linearführungseinrichtung verwirklicht, die um die erste Rotationsachse drehbar ist. Die zweite Plattform und damit der Strahlbearbeitungskopf sind dabei entlang der Linearführungseinrichtung geführt. Die durch die Linearführungseinrichtung definierte Verschieberichtung steht im Wesentlichen quer zur ersten Rotationsachse.

Bevorzugt ist die Zuleitung drehfest mit dem Strahlbearbeitungskopf verbunden.

Bevorzugt umfasst die Verdrehsicherung eine gesonderte Verbindungsstruktur, die den Strahlbearbeitungskopf an die erste Plattform anbindet. Es handelt sich dabei vorteilhaft um eine direkte Verbindung zwischen Strahlbearbeitungskopf und erster Plattform, die zusätzlich zu den kinematischen Verbindungen zwischen den Plattformen bzw. Strahlbearbeitungskopf vorhanden ist. Eine Lagemessung des Strahlbearbeitungskopfes kann z. B. über die Verdrehsicherung erfolgen.

Bevorzugt umfasst die Verbindungsstruktur eine erste Linearführung und eine zweite Linearführung, die zueinander vorzugsweise im rechten Winkel geneigt bzw. angeordnet sind. Dies stellt eine einfache und zuverlässige Lösung dar, die eine Verdrehung zur Gänze verhindert. Die zueinander orthogonalen Führungen können in einer seriellen, aber auch in einer parallelkinematischen Konstruktion eingebunden sein.

Bevorzugt ist die erste Linearführung auf der ersten Plattform angeordnet, ist die zweite Linearführung entlang der ersten Linearführung geführt und ist der Strahlbearbeitungskopf entlang der zweiten Linearführung geführt. Dies stellt eine bevorzugte serielle Anordnung der Linearführungen dar.

Bevorzugt weist die Strahlbearbeitungsvorrichtung zum Ausgleich des Gewichtes der Strahlbearbeitungskopfes ein Gegengewicht auf, das gemäss dem translatorischen Freiheitsgrad (T1) der zweiten Plattform relativ zur ersten Plattform jeweils in entgegengesetzte Richtung zur zweiten Plattform bewegbar ist. Die Gegenmasse ist vorzugsweise relativ zum Strahlbearbeitungskopf derart mechanisch mit einem Getriebe gekoppelt, dass bei einer Translation des Strahlbearbeitungskopfes in eine Richtung, sich die Gegenmasse in die gegengesetzte Richtung bewegt. Durch die Massnahme mit Gegenmasse können resultierende Störkräfte auf die unterlagerte X- und Y-Achse minimiert werden und dadurch kann die Dynamik erhöht und können Vibrationen und Verformungen der Konstruktion minimiert werden.

Bevorzugt weist die Strahlbearbeitungsvorrichtung einen ersten Antrieb, der über ein erstes Übertragungsmittel mit der zweiten Plattform zusammenwirkt, um eine Bewegung der zweiten Plattform relativ zur ersten Plattform entsprechend ihrem rotatorischen Freiheitsgrad (R1) zu bewirken, und einen zweiten Antrieb, der über ein zweites Übertragungsmittel mit der zweiten Plattform zusammenwirkt, um eine Bewegung der zweiten Plattform und damit des Strahlbearbeitungskopfes relativ zur ersten Plattform entsprechend dem translatorischen Freiheitsgrad T1 zu bewirken, auf, wobei vorzugsweise der erste Antrieb und der zweite Antrieb auf der ersten Plattform oder auf der mit der ersten Plattform drehfest verbundenen Basisplattform angeordnet sind. Dies erlaubt eine übersichtliche Konstruktion, bei der vorzugsweise beide Antriebe auf derselben Plattform sitzen (beide Antriebe "stationär" oder "stehend", d. h. deren Antriebsachsen verlaufen im Wesentlichen parallel zu den Rotationsachsen der Plattformen). Dadurch muss weniger Gewicht bewegt werden, wodurch die Dynamik erhöht und damit die Bearbeitung beschleunigt werden kann.

Bevorzugt bilden der erste Antrieb und das erste Übertragungsmittel und der zweite Antrieb und das zweite Übertragungsmittel zusammen mit der zweiten Plattform und/oder dem Strahlbearbeitungskopf eine Parallelkinematik.

Unter Parallelkinematik im Sinne dieser Anmeldung wird verstanden, dass zwei Antriebsstränge zumindest abschnittsweise parallel verlaufen, insbesondere, dass zwei Antriebe der Bewegungseinheit parallel angeordnet sind bzw. an derselben Plattform sitzen. D.h. bedeutet, dass der eine Antrieb als solcher nicht vom anderen Antrieb bewegt wird und umgekehrt.

Alternativ zu einem parallelkinematischen Antrieb kann selbstverständlich auch ein serieller Antrieb der zweiten Plattform vorgesehen sein.

Bei der Ausbildung der konkreten Konstruktion ist zu unterscheiden zwischen der Lagerung bzw. Führung der zweiten Plattform gemäß den Freiheitsgraden R1-T1-R2 einerseits und dem Antrieb entlang dieser Freiheitsgrade andererseits.

Die Lagerung bzw. Führung der zweiten Plattform relativ zur ersten Plattform ist vorzugsweise rein seriell. Dadurch kann eine exakte und reproduzierbare Führung bzw. Positionierung des Strahlbearbeitungskopfes erreicht werden.

Der Antriebsmechanismus, der nun die Bewegung entlang dieser Freiheitsgrade bewirkt, kann jedoch zwei parallel angeordnete Antriebe aufweisen, die über zwei parallel verlaufende Antriebsstränge direkt oder indirekt auf die zweite Plattform einwirken.

In der bevorzugten Ausführungsform ist die Lagerung bzw. Führung des Strahlbearbeitungskopfes seriell ausgebildet, während der Antriebsmechanismus parallel ist. Ein Serieller Antrieb ist jedoch prinzipiell nicht ausgeschlossen.

Dies vereinfacht die Konstruktion, erhöht die Genauigkeit sowie die Dynamik und stellt eine kostengünstige Lösung dar, da der zweite Antrieb selbst nicht durch den ersten Antrieb mitbewegt werden muss.

Bevorzugt ist das erste Übertragungsmittel eine erste Scheibe, die im Wesentlichen senkrecht zur ersten Rotationsachse steht und um die erste Rotationsachse rotierbar ist, wobei an der ersten Scheibe eine Linearführungseinrichtung ausgebildet ist, durch die die zweite Plattform geführt ist, wobei vorzugsweise die Linearführungseinrichtung zumindest eine Schiene umfasst.. Eine drehbare Scheibe ist leicht antreibbar, leicht zu lagern, platzsparend und kann durch Vorsehen einer Linearführungseinrichtung den translatorischen Freiheitsgrad definieren.

Optional wird das Gegengewicht ebenfalls durch die Linearführungseinrichtung geführt, welche die zweite Plattform führt.

Bevorzugt ist das zweite Übertragungsmittel eine zweite Scheibe, die im Wesentlichen senkrecht zur ersten Rotationsachse steht und um die erste Rotationsachse rotierbar ist, wobei in der zweiten Scheibe zumindest ein erster bogenförmiger Kulissenführungsabschnitt ausgebildet ist, durch den die zweite Plattform geführt und bewegt wird, wobei die Führung vorzugsweise dadurch erfolgt, dass der Strahlbearbeitungskopf und/oder mindestens ein mit der zweiten Plattform verbundenes Führungselement in den bogenförmigen Kulissenführungsabschnitt ragt. Damit können die axial und parallel zueinander angeordneten Scheiben im Zusammenwirken gleich mehrere Funktionen übernehmen, nämlich Verschiebung und Führen entlang des translatorischen Freiheitsgrades, Drehen um den rotatorischen Freiheitsgrades (R1) der zweiten Plattform, Lagerung des Strahlbearbeitungskopfes.

Bevorzugt ragt der Strahlbearbeitungskopf und/oder zumindest ein mit der zweiten Plattform verbundenes Führungselement durch den ersten Durchgangsöffnungsabschnitt der ersten Scheibe und durch den ersten bogenförmigen Kulissenführungsabschnitt der zweiten Scheibe. Der Strahlbearbeitungskopf und/oder die zweite Plattform gelangen dadurch auf elegante Weise in den Wirkungsbereich der beiden Antriebs- bzw. Führungsscheiben.

Bevorzugt ist das erste Übertragungsmittel und/oder das zweite Übertragungsmittel in Form einer Zahnradscheibe ausgebildet. Dies ermöglicht eine besonders leichte Ankopplung an einen Antrieb (z.B. über ein Ritzel).

Alternativ ist der Antrieb als Direktantrieb (auch Torquemotor genannt) ausgebildet und das erste Übertragungsmittel und/oder das zweite Übertragungsmittel umfasst Magneten, welche beispielsweise direkt auf der entsprechenden Plattform, z. B. an deren äusseren Umfang, angeordnet sind. Die entsprechende Plattform mit den Magneten, z. B. Permanentmagneten bildet vorteilhaft den Rotor des Direktantriebs.

Bevorzugt ist das Gegengewicht in einem zweiten bogenförmigen Kulissenführungsabschnitt der zweiten Scheibe geführt, wobei der zweite bogenförmige Kulissenführungsabschnitt relativ zum ersten bogenförmigen Kulissenführungsabschnitt gegensinnige Biegung aufweist. Eine Führung des Gegengewichts kann beispielsweise auch durch die Kulissenführungsabschnitte erfolgen. Die Führung bzw. Bewegung des Gegengewichts wird durch dieselbe (zweite) Scheibe bewirkt, die auch auf die zweite Plattform bzw. den Strahlbearbeitungskopf einwirkt.

Bevorzugt ist der zweite Antrieb ein Linearantrieb, dessen Linearachse parallel zur ersten Rotationsachse ist, wobei vorzugsweise die Linearachse des Linearantriebs mit der ersten Rotationsachse zusammenfällt. Durch diese Massnahme erfolgt eine Entkopplung des rotatorischen Freiheitsgrades (R1) der zweiten Plattform um die erste Rotationsachse vom Antrieb des translatorischen Freiheitsgrades (T1). Dadurch wiederum kann der zweite Antrieb an der ersten Plattform bzw. der daran drehfest angebundenen Basisplattform befestigt sein.

Bevorzugt wirkt der zweite Antrieb mit dem zweiten Übertragungsmittel über ein Drehelement zusammen, dessen Drehachse mit der ersten Rotationsachse zusammenfällt, wobei vorzugsweise das Drehelement eine Stange ist, dessen Längsachse mit seiner Drehachse zusammenfällt. Dies stellt eine Alternativmöglichkeit dar, den Antrieb des translatorischen Freiheitsgrades (T1) vom rotatorischen Freiheitsgrad (R1) der zweiten Plattform zu entkoppeln und den zweiten Antrieb stationär mit dem ersten Antrieb anzuordnen.

Bevorzugt ist das zweite Übertragungsmittel ein Gelenkmechanismus. Dadurch kann eine Bewegung entlang oder um die erste Rotationsachse in eine Bewegung gemäss dem translatorischen Freiheitsgrad (T1) einfach umgewandelt werden.

Bevorzugt umfasst der Gelenkmechanismus ein Übertragungselement, das jeweils an der zweiten Plattform und an der Linearachse des Linearantriebes angelenkt ist, wobei vorzugsweise das Übertragungselement zwischen den Anlenkpunkten eine bogenförmige oder geknickte Form aufweist.

Bevorzugt umfasst der Gelenkmechanismus zumindest einen Hebel.

Bevorzugt umfasst der Gelenkmechanismus zwei gegensinnig wirkende Zweige, wobei ein erster Zweig mit der zweiten Plattform zusammenwirkt und ein zweiter Zweig mit dem Gegengewicht zusammenwirkt. Dadurch können mit demselben (zweiten) Antrieb Strahlbearbeitungskopf und Gegengewicht bewegt werden.

Weitere Vorteile der bevorzugten Ausführungsformen sind nachstehend beschrieben:
- Die Antriebe (erster und zweiter Antrieb) sind beide stationär und können z.B. als Servomotoren mit Verzahnung (Ritzel) ausgebildet sein.
- Durch die Verdrehsicherung des Strahlbearbeitungskopfes besteht kein Bedarf mehr für eine drehbare Zuleitungs-Kopplung (Laserfaser-Kopplung). Das Problem der verdrehten Zuleitung kann vermieden werden durch Sperren des Drehfreiheitsgrades des Strahlbearbeitungskopfes relativ zur ersten Plattform.
- Kompakte und platzsparende Bauweise.
- Hohes Potential bezüglich Dynamik und Genauigkeit.

Es handelt sich um eine Antriebseinheit für einen Strahlbearbeitungskopf mit nichtkartesischer Kinematik und "stehenden" Antrieben. Somit handelt es sich um einen Strahlbearbeitungskopf mit zumindest einem nicht translatorischen Antrieb und einem zusätzlichen Drehfreiheitsgrad (R2), der eine Verhinderung einer (mehrfachen) Drehung der strahlleitenden Zuleitung ermöglicht.

Die radiale Verstellung (translatorischer Freiheitsgrad (T1)) kann auch auf weitere Arten mit "stehenden" Antrieben gelöst werden.

Durch Rotation eines Drehelements können zwei Massen, Strahlbearbeitungskopf und ein entsprechendes Gegengewicht, radial in entgegengesetzter Richtung bewegt werden.

Im Gegensatz zur US7767932B2 wird durch den nicht mitdrehenden zweiten Antrieb für die radiale Achse eine Endlosdrehung ermöglicht, ohne dass Energie- und Signalübertragung über Schleifringe oder derartige Elemente erforderlich wäre.

Weitere Vorteile der Erfindung sind: Störkräfte auf Grundachsen werden minimiert, Massenausgleich wird konstruktiv einfach gelöst, weniger beschleunigte Massen, Schneiden von Kreisen oder Bogenabschnitten mit hoher Genauigkeit und Dynamik.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind.

Die Bezugszeichenliste ist Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig. 1: eine erfindungsgemässe Strahlbearbeitungsvorrichtung mit einer Bewegungseinheit,
- Fig. 2: das Prinzip der Erfindung anhand einer schematischen Darstellung,
- Fig. 3: ein Detail der Fig. 2 in vergrösserter Darstellung,
- Fig. 4: eine Explosionsansicht einer Bewegungseinheit,
- Fig. 5: einen Schnitt durch die Bewegungseinheit mit in Z-Richtung nach oben verfahrenen Strahlbearbeitungskopf und ihre Ansicht von oben,
- Fig. 6: die Bewegungseinheit aus Fig. 5 mit in Z-Richtung nach unten verfahrenen Strahlbearbeitungskopf,
- Fig. 7: die Bewegungseinheit in perspektivischer Ansicht von unten,
- Fig. 8: die Bewegungseinheit in perspektivischer Ansicht von oben,
- Fig. 9 bis 15: jeweils die Bewegungseinheit gleichzeitig von unten und von oben in verschiedenen Relativstellungen von erster Scheibe und zweiter Scheibe,
- Fig. 16: eine Ausführungsform der Erfindung im Schnitt,
- Fig. 17 bis 19: die Bewegungseinheit der Fig. 16 in verschiedenen Stellungen des Gelenkmechanismus, teilweise in geschnittener Darstellung,
- Fig. 20: die Bewegungseinheit in perspektivischer Ansicht ohne Gehäuse,
- Fig. 21: die Bewegungseinheit aus Fig. 20 mit Gehäuse,
- Fig. 22 und 23: eine Ausführungsform des Gelenkmechanismus in Seitenansicht und von oben,
- Fig. 24: eine weitere Ausführungsform der Erfindung in einer perspektivischen Ansicht,
- Fig. 25: eine Detailansicht der Ausführungsform der Fig. 4 bis 15.

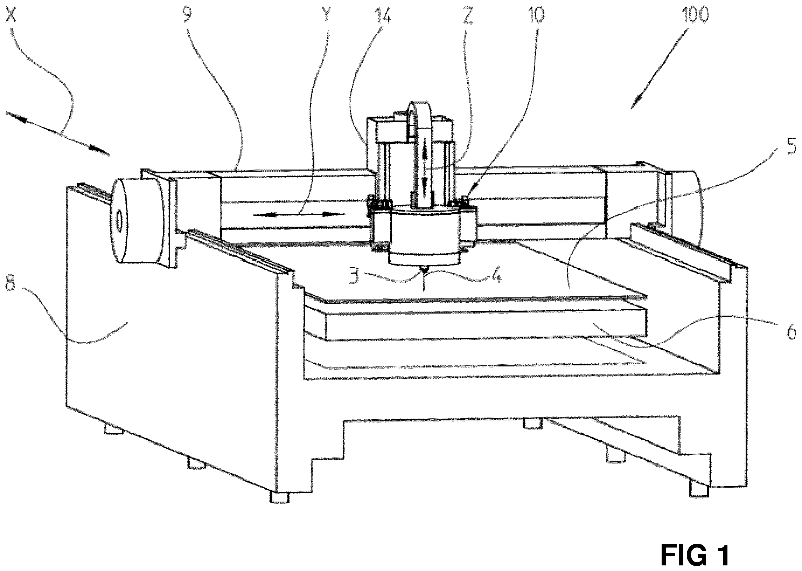

Fig. 1 zeigt eine Strahlbearbeitungsvorrichtung 100 mit einem Grundgestell 8, auf dem ein Träger 9 entlang einer linearen Verschiebeachse X verfahrbar angeordnet ist. Auf dem Träger 9 ist eine Bewegungseinheit 10 entlang einer linearen Verschiebeachse Y, die orthogonal zur Verschiebeachse X steht, verfahrbar angeordnet. Unterhalb der Bewegungseinheit 10 ist eine Werkstückauflage 6 angeordnet, die ein zu bearbeitendes Werkstück 5 trägt. Die Bewegungseinheit 10 ist auf einem Y-Schlitten 14 angeordnet, so dass die Bewegungseinheit 10 als Ganzes relativ zum Träger 9 in Z-Richtung, welche in diesem Beispiel senkrecht zu der von der Verschiebeachse X und der Verschiebeachse Y aufgespannten Ebene steht, senkrecht zum Werkstück 5 positioniert werden kann. Eine bevorzugte Ausführungsform besteht darin, die lineare Verschiebeachse Z1 als Einstellachse zu verwenden und die (erst weiter unten beschriebene) lineare Verschiebeachse Z2 innerhalb der Bewegungseinheit 10 als dynamische Achse während der Strahlbearbeitung zu nutzen.

Die Bewegungseinheit 10 trägt einen Strahlbearbeitungskopf 3, z.B. einen Laserstrahl-Bearbeitungskopf oder einen Fluidstrahl-Bearbeitungskopf, durch den eine Strahlaustrittsachse 4 definiert wird, entlang der bei der Bearbeitung der Strahl austritt (Strahlaustrittsöffnung). Innerhalb der Bewegungseinheit 10 ist der Strahlbearbeitungskopf 3 derart gelagert und angetrieben, dass verschiedene Bewegungen mit ihm ausgeführt werden können.

Die Bewegungseinheit stellt eine Einheit dar, mit der beliebige Bewegungen des Strahlbearbeitungskopfes in einem reduzierten Arbeitsraum gefahren werden können. Dies führt zu einem 4-achsigen System für eine 2-achsige Bahn bzw. ebene Werkstücke und damit zu redundanten Achsen. Durch geeignete Bahnaufteilung können mit den grossen trägen Achsen X und Y weiche Bahnen gefahren werden und mit den kleinen dynamischen Achsen innerhalb der Bewegungseinheit dafür gesorgt werden, dass beliebig komplexe Teile mit hohen mittleren Schnittgeschwindigkeiten gefahren werden. Beispielsweise soll bei prozessbedingt maximaler Schnittgeschwindigkeit von 30m/min eine Erhöhung der mittleren Schnittgeschwindigkeit um mind. 50% erreicht werden gegenüber einer konventionellen Strahlbearbeitungsvorrichtung ohne überlagerte Achsen und ohne die Teilegenauigkeit zu verschlechtern.

Die Erfindung ermöglicht eine simultane Ansteuerung der Freiheitsgrade bzw. Achsen mit einer überlagernden Methodik. Entsprechende Algorithmen können vorgesehen sein, die die Bahn des Strahlbearbeitungskopfes 3 auf die schnellen lokalen Achsen innerhalb der Bewegungseinheit 10 (Z1, R1, T1, R2) sowie auf die trägeren langsamen Achsen außerhalb der Bewegungseinheit 10 (X, Y, Z1) aufteilt. Vorzugsweise sind demnach die Freiheitsgrade innerhalb der Bewegungseinheit 10 hoch dynamisch ansteuerbare Freiheitsgrade, während die Freiheitsgrade außerhalb der Bewegungseinheit 10 bzw. die Freiheitsgrade, gemäß denen die Bewegungseinheit 10 als Ganzes verfahren werden kann, langsam ansteuerbare Freiheitsgrade.

Die Bearbeitungs- bzw. Schneidplanerzeugung und Bahnplanungsaufteilung kann sowohl auf der maschinenbezogenen Steuerung wie auch in einer vorgelagerten Auftragssteuerung definiert werden.

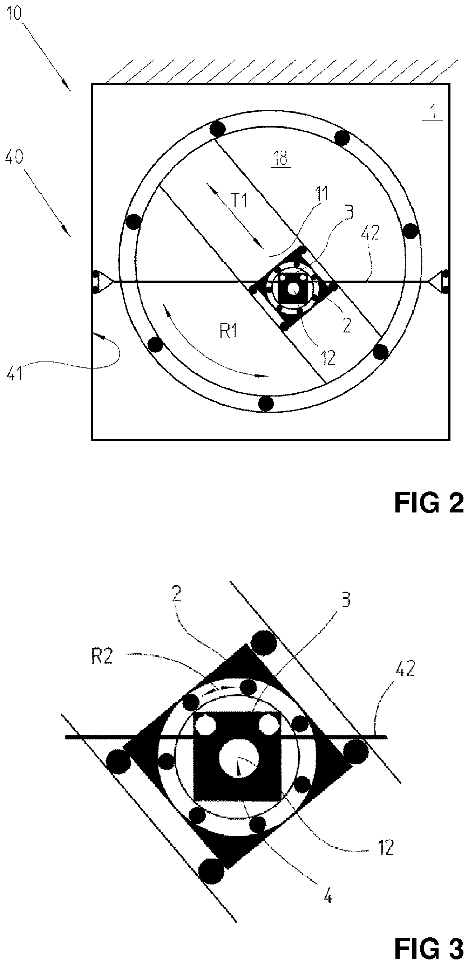

Das Prinzip der Erfindung wird zunächst anhand der Fig. 2 und 3 erläutert. Fig. 2 zeigt das kinematische Innenleben der Bewegungseinheit 10. Zunächst ist durch die Bewegungseinheit 10 eine erste Plattform 1 definiert. Eine zweite Plattform 2 ist relativ zur ersten Plattform 1 bewegbar, wobei die zweite Plattform 2 relativ zur ersten Plattform 1 einen rotatorischen Freiheitsgrad R1 um eine erste Rotationsachse 11 aufweist. Der Strahlbearbeitungskopf 3 ist auf der zweiten Plattform 2 gelagert, wobei der Strahlbearbeitungskopf 3 relativ zur zweiten Plattform 2 einen rotatorischen Freiheitsgrad R2 um eine zweite Rotationsachse 12 aufweist, die im Wesentlichen parallel zur ersten Rotationsachse 11 des rotatorischen Freiheitsgrades R1 der zweiten Plattform 2 relativ zur ersten Plattform 1 ist und im Wesentlichen mit der Strahlaustrittsachse 4 zusammenfällt.

Der rotatorische Freiheitsgrad R2 des Strahlbearbeitungskopfes 3 relativ zur zweiten Plattform 2 ist vorzugsweise ein passiver, d.h. nicht angetriebener Freiheitsgrad.

Kinematisch ist zwischen erster Plattform 1 und zweiter Plattform 2 eine Zwischenplattform 18 geschaltet, die es ermöglicht, dass die zweite Plattform 2 relativ zur ersten Plattform 1 zusätzlich zum rotatorischen Freiheitsgrad R1 einen translatorischen Freiheitsgrad T1 aufweist, der quer zur ersten Rotationsachse 11 des rotatorischen Freiheitsgrades R1 verläuft.

Die Zwischenplattform 18 überträgt somit die Winkelveränderung um die erste Rotationsachse 11 auf die zweite Plattform 2.

In den Fig. 2 und 3 ist bereits zu sehen, dass die Bewegungseinheit 10 eine Verdrehsicherung 40 für den Strahlbearbeitungskopf 3 umfasst, die eine Verdrehung des Strahlbearbeitungskopfes 3 relativ zur ersten Plattform 1 um seine Strahlaustrittsachse 4 verhindert. Die Verdrehsicherung 40 umfasst eine gesonderte Verbindungsstruktur, die den Strahlbearbeitungskopf 3 an die erste Plattform 1 anbindet. Im dargestellten Ausführungsbeispiel umfasst die Verbindungsstruktur eine erste Linearführung 41 und eine zweite Linearführung 42, die zueinander vorzugsweise im rechten Winkel geneigt sind. Die erste Linearführung 41 ist auf der ersten Plattform 1 angeordnet, die zweite Linearführung 42 ist entlang der ersten Linearführung 41 geführt und der Strahlbearbeitungskopf 3 ist entlang der zweiten Linearführung 42 geführt. Dadurch kann der Strahlbearbeitungskopf 3 als solcher zwar entsprechend dem rotatorischen Freiheitsgrades R1 und dem translatorischen Freiheitsgrades T1 bewegt werden, eine Verdrehung des Strahlbearbeitungskopf 3 relativ zur ersten Plattform 1 um seine eigene Achse wird jedoch verhindert, wodurch auch seine Zuleitung, z.B. Laserfaser, Fluidzuleitung, Steuerleitung, elektrische Energiezuleitung, etc., nicht verdrillt werden kann.

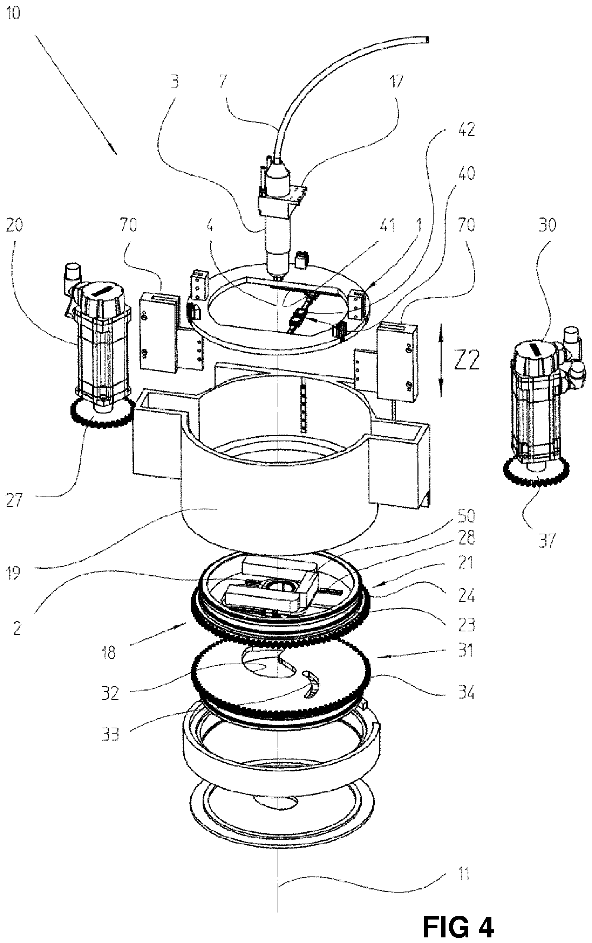

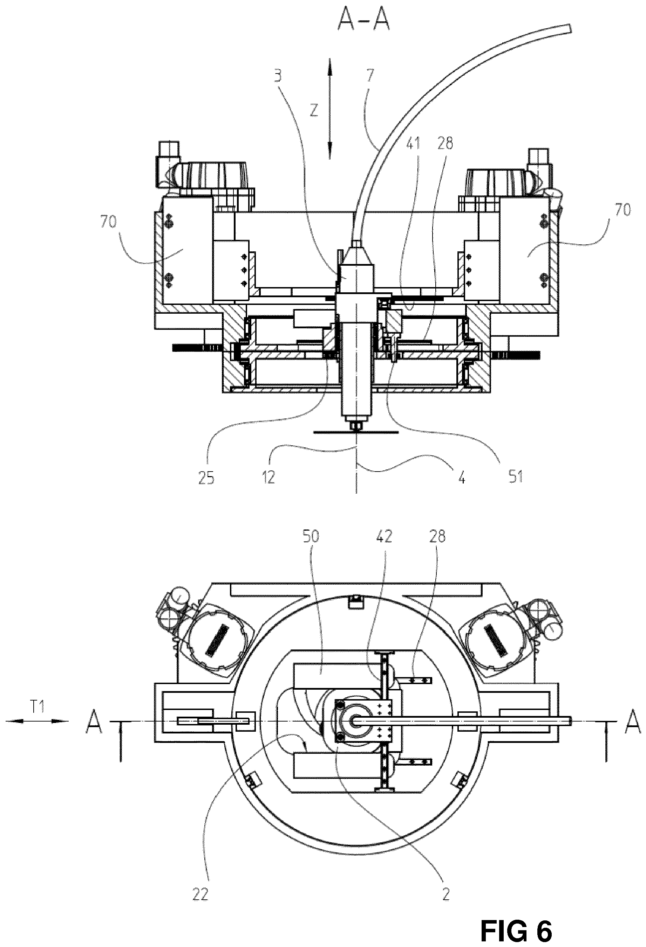

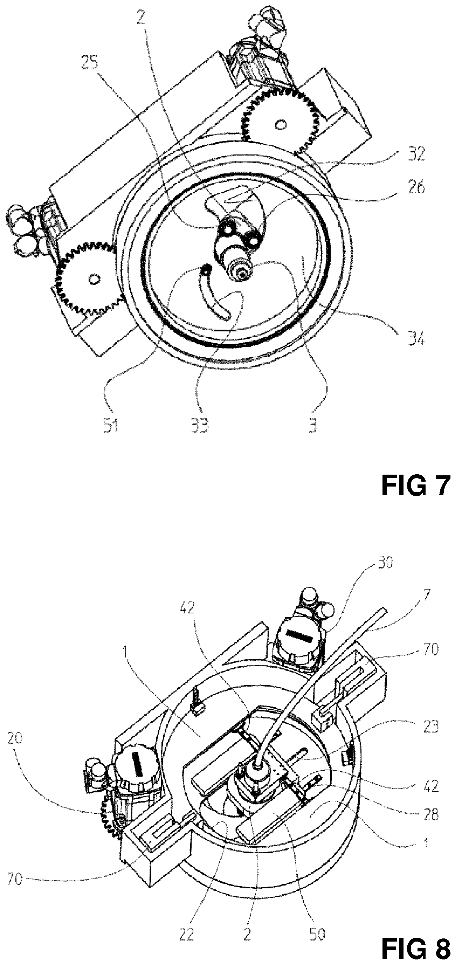

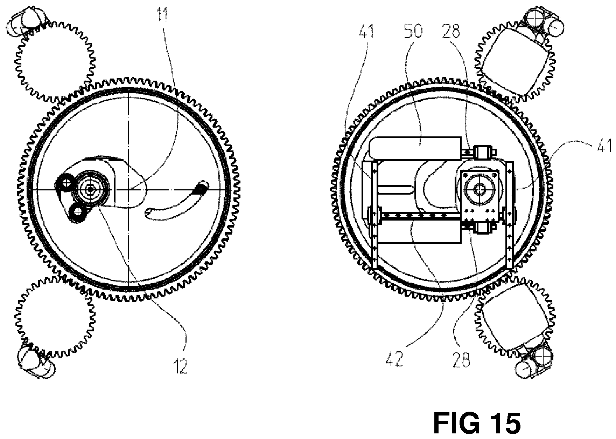

Die Fig. 4 bis 15 sowie 25 zeigen ein Ausführungsbeispiel der Erfindung. Anhand der Explosionsansicht der Fig. 4 werden zunächst die einzelnen Komponenten näher beschrieben. Der Strahlbearbeitungskopf 3, in den eine Zuleitung 7 mündet, definiert eine Strahlaustrittsachse 4, entlang der bei der Bearbeitung der Strahl austritt. Am Strahlbearbeitungskopf 3 ist - integral ausgeformt oder daran befestigt - ein Führungselement 17 ausgebildet, das mit der zweiten Linearführung 42 der Verdrehsicherung 40 derart zusammenwirkt, dass der Strahlbearbeitungskopf 3 entlang der zweiten Linearführung 42 verschiebbar ist. Die erste Plattform 1 trägt die erste Linearführung 41, entlang der die zweite Linearführung 42 verschiebbar ist. Anstelle der dargestellten seriellen Verdrehsicherung mit seriell geschalteten Führungen könnte auch eine parallelkinematische Verdrehsicherung mit parallel wirkenden Führungen zum Einsatz kommen.

Die erste Plattform 1 weist eine Ausnehmung auf, durch die der Strahlbearbeitungskopf 3 hindurchragt. Eine Basisplattform 19 in Form eines Gehäuses umgibt die erste Plattform 1 und trägt einen Linearantrieb 70, mit dem die erste Plattform 1 zusammen mit dem an der ersten Plattform 1 geführten Strahlbearbeitungskopf 3 entlang der linearen Verschiebeachse Z2 verschiebbar ist. Im dargestellten Beispiel ist diese Verschiebeachse Z2 vertikal ausgerichtet. Die lineare Verschiebeachse Z2 steht hier orthogonal zu den linearen Verschiebeachsen X und Y (Fig. 1). Dadurch kann der Bearbeitungsabstand zum Werkstück 5 eingestellt werden. Die erste Plattform 1 ist relativ zur Basisplattform 19 entlang der linearen Verschiebeachse Z2 verschiebbar, ist aber gleichzeitig drehfest mit der Basisplattform 19 verbunden.

Die Verschiebeachse Z2 stellt somit einen linearen Freiheitsgrad des Strahlbearbeitungskopfes 3 innerhalb der bzw. relativ zur Bewegungseinheit 10 dar, während die Verschiebeachse Z1 einem Freiheitsgrad der Bewegungseinheit 10 als Ganzes gegenüber dem Träger 9 entspricht. Die lineare Verschiebeachse Z2 muss nicht unbedingt parallel zur linearen Verschiebeachse Z1 aus Fig. 1 sein. Auch muss die lineare Verschiebeachse Z1 nicht zwingend orthogonal zu den linearen Verschiebeachsen X und Y sein, z.B. wenn sie nur als Einstellachse eingesetzt wird.

Es ist ohne weiteres denkbar auf die Verschiebeachse Z1 zu verzichten und für die Verschiebung des Strahlbearbeitungskopfes 3 einzig die Verschiebeachse Z2 vorzusehen.

Der Strahlbearbeitungskopf 3 ist in der zweiten Plattform 2 um eine zweite Rotationsachse 12 drehbar gelagert (rotatorischer Freiheitsgrad R2). Die zweite Plattform 2 wird von einem ersten Übertragungsmittel 21 getragen bzw. geführt. Das erste Übertragungsmittel 21 ist im dargestellten Beispiel eine erste Scheibe 24, die in der Basisplattform 19 um eine Achse, die die erste Rotationsachse 11 des rotatorischen Freiheitsgrades R1 darstellt, drehbar gelagert ist. Die erste Scheibe 24 steht dabei im Wesentlichen senkrecht zur ersten Rotationsachse 11. Die erste Scheibe 24 ist in Form einer Zahnradscheibe ausgebildet und wird von einem ersten Antrieb 20 über ein erstes Ritzel 27 angetrieben. Der erste Antrieb 20 ist an der Basisplattform 19 befestigt.

Die Variante aus Fig. 4 besitzt innerhalb der Bewegungseinheit 10 die drei Bewegungsachsen bzw. -Freiheitsgrade: R1, T1 und R2, sowie die optionale Z2-Achse. Die Lagerung und der Antrieb dieser Z2-Achse sind parallel und nur in dieser Variante dargestellt. Die erste Plattform 1 ist jene Plattform, an der die Verdrehsicherung befestigt ist. Bei Weglassen der optionalen Z2-Verschiebbarkeit wäre die Verdrehsicherung an der Basisplattform 19 angeordnet bzw. wäre dann die erste Plattform 1 fest verbundener Teil der Basisplattform 19.

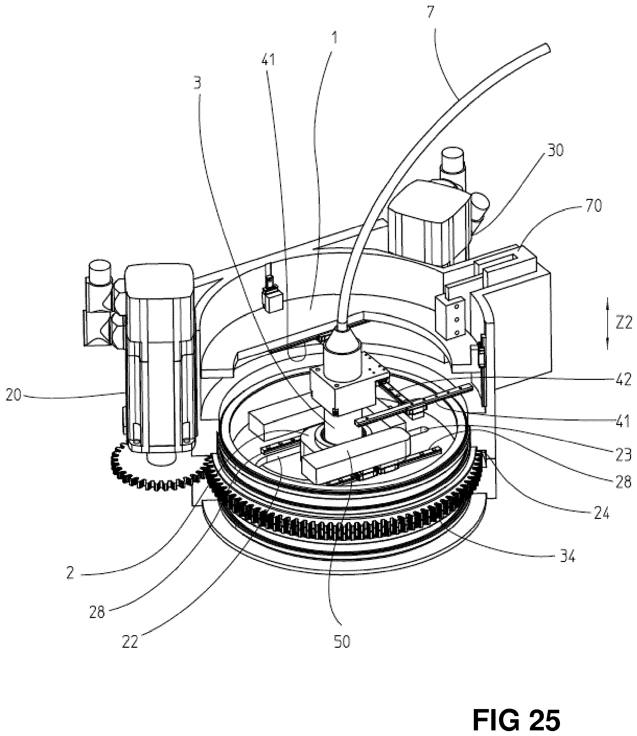

Die erste Scheibe 24 ("Linearscheibe") entspricht der Zwischenplattform 18 aus Fig. 2 und umfasst eine Linearführungseinrichtung 28, durch die die zweite Plattform 2 geführt ist. Im dargestellten Ausführungsbeispiel umfasst die Linearführungseinrichtung 28 zwei gerade (Gleit-)Schienen, die sich beidseitig entlang eines ersten Durchgangsöffnungsabschnittes 22 in der ersten Scheibe 24 erstrecken. Durch die Linearführungseinrichtung 28 wird der translatorische Freiheitsgrad T1 definiert. Besonders deutlich zu sehen ist die Linearführungseinrichtung 28 in Fig. 25.

In einer Ausführungsform der Erfindung könnte auch der linear verlaufende erste Durchgangsöffnungsabschnitt 22 die Funktion einer Linearführung übernehmen. Bei entsprechender Ausbildung von Führungselementen wäre der Durchgangsöffnungsabschnitt 22 ein linearer Kulissenführungsabschnitt.

Axial zum ersten Übertragungsmittel 21 ist ein zweites Übertragungsmittel 31 vorgesehen, das in Form einer zweiten Scheibe 34 ausgebildet ist. Diese ist analog zur ersten Scheibe 24 in der Basisplattform 19 um die erste Rotationsachse 11 drehbar gelagert. Die zweite Scheibe 24 steht dabei im Wesentlichen senkrecht zur ersten Rotationsachse 11. Die zweite Scheibe 34 ist in Form einer Zahnradscheibe ausgebildet und wird von einem zweiten Antrieb 30 über ein zweites Ritzel 37 angetrieben. Der zweite Antrieb 30 ist an der Basisplattform 19 befestigt.

Die zweite Scheibe 34 ("Kurvenscheibe") dient dazu, die zweite Plattform 2 entlang der Linearführungseinrichtung 28 der ersten Scheibe 24 (also gemäss dem translatorischen Freiheitsgrad T1) zu bewegen. Dazu ist in der zweiten Scheibe 34 ein erster bogenförmiger Kulissenführungsabschnitt 32 ausgebildet. Die Führungselemente 25, 26, die durch den ersten Durchgangsöffnungsabschnitt 22 der ersten Scheibe 24 ragen, werden durch den ersten bogenförmigen Kulissenführungsabschnitt 32 der zweiten Scheibe 34 geführt bzw. bewegt.

Hier wird der Zweck des Durchgangsöffnungsabschnittes 22 offensichtlich: Er dient dazu, dass die Führungselemente 25, 26 von der zweiten Plattform 2 bis zur zweiten Scheibe 34 ("Kurvenscheibe") hindurchragen können und ihre durch eine Drehung der zweiten Scheibe 34 induzierte Bewegung nicht gehindert wird.

Der erste Antrieb 20 und das erste Übertragungsmittel 21 und der zweite Antrieb 30 und das zweite Übertragungsmittel 31 bilden zusammen mit der zweiten Plattform 2 und dem Strahlbearbeitungskopf 3 eine Parallelkinematik, da die Übertragungsmittel 21, 31 jeweils einen parallelen Antriebsstrang ausbilden.

Nicht näher bezeichnete Abschlusselemente schliessen die Basisplattform 19 von unten her ab, wobei eine bogenförmige Öffnung im unteren Deckel den Durchtritt des Strahlbearbeitungskopfes bzw. des Strahles gewährleistet.

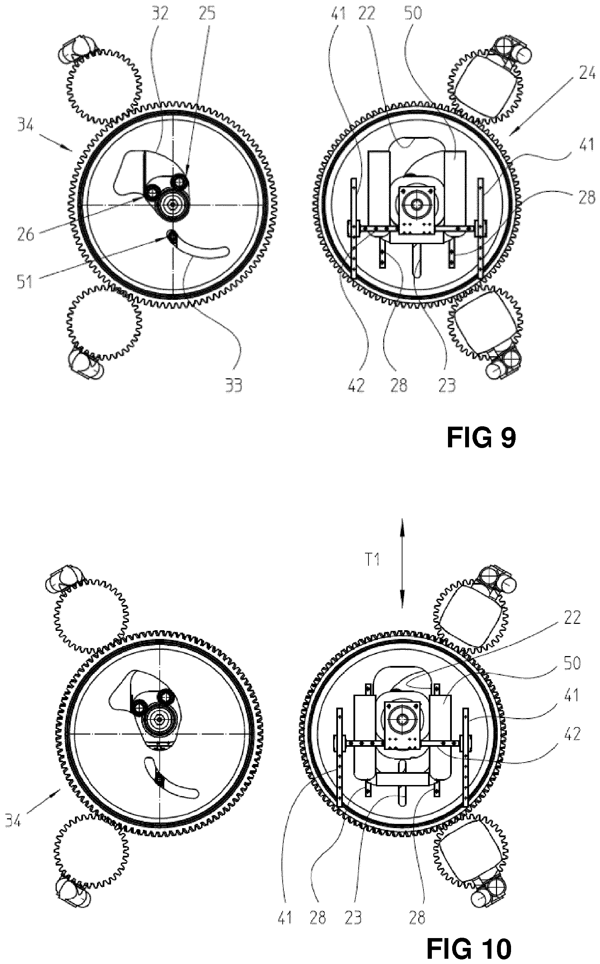

Die Funktionsweise der ersten und zweiten Scheibe wird später anhand der Figuren 9 bis 15 näher erläutert.

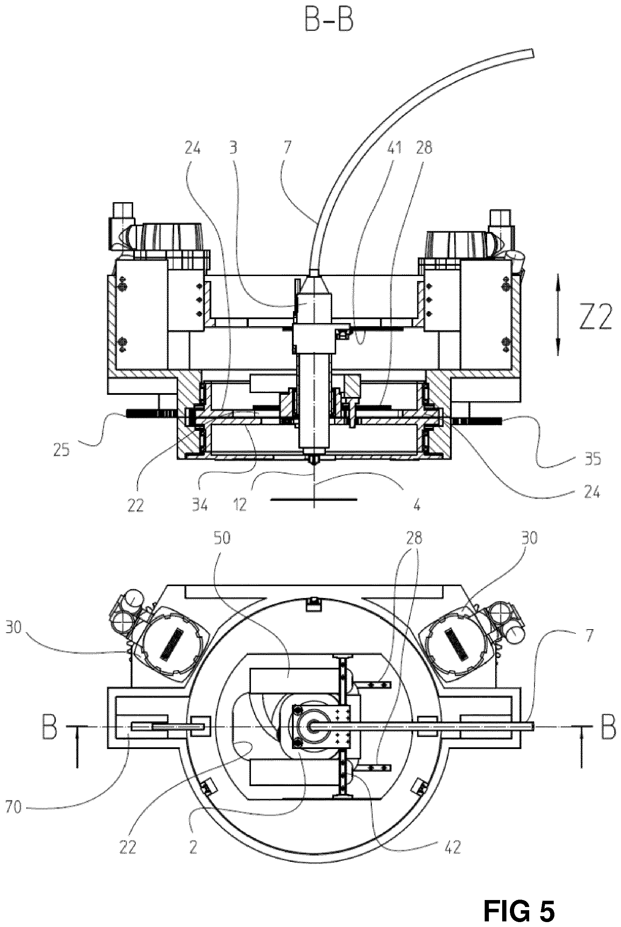

Fig. 5 zeigt im Schnitt und in Draufsicht eine zusammengebaute Bewegungseinheit 10. In der Draufsicht sind zusätzlich Gegengewichte 50 zu sehen, die dem Ausgleich des Gewichtes der Strahlbearbeitungskopfes 3 während seiner Bewegung dient. Das Gegengewicht 50 ist gemäss dem translatorischen Freiheitsgrad T1 der zweiten Plattform 2 bzw. des Strahlbearbeitungskopfes 3 relativ zur ersten Plattform 1 jeweils in entgegengesetzte Richtung bewegbar. Im dargestellten Ausführungsbeispiel ist das Gegengewicht 50 durch dieselbe Linearführungseinrichtung 28 geführt, durch die auch die zweite Plattform 2 geführt ist (besonders deutlich in Fig. 25 zu sehen).

Wie für die Führungselemente 25, 26 der zweiten Plattform 2 ist auch für ein Führungselement 51 des Gegengewichtes 50 ein zweiter Durchgangsöffnungsabschnitt 23 in der ersten Scheibe 23 vorgesehen, der parallel zum ersten Durchgangsöffnungsabschnitt 22 verläuft. Das Führungselement 51 ragt durch den zweiten Durchgangsöffnungsabschnitt 23 der ersten Scheibe, um durch die zweite Scheibe 34 wie folgt angetrieben bzw. bewegt zu werden.

Angetrieben wird das Gegengewicht 50 durch denselben Antriebsmechanismus wie der Strahlbearbeitungskopf 3, nämlich über einen zweiten bogenförmigen Kulissenführungsabschnitt 33 der zweiten Scheibe 34, wobei der zweite bogenförmige Kulissenführungsabschnitt 33 relativ zum ersten bogenförmigen Kulissenführungsabschnitt 32 gegensinnige Biegung aufweist. Die gegensinnige Biegung bewirkt, dass sich Laserbearbeitungskopf 3 und Gegengewicht 50 jeweils in entgegengesetzte Richtungen bewegen.

Durch die Einwirkung der Drehbewegung der zweiten Scheibe 34 relativ zur ersten Scheibe 24 wird die zweite Plattform 2 mit dem Strahlbearbeitungskopf 3 und dem Gegengewicht 50 durch Verdrängen der Führungselemente 25, 26 und 51, die vorzugsweise als Kurvenrollen ausgebildet sind, entlang der Führungskulissenflächen des ersten und zweiten Führungskulissenabschnitte 32, 33 translatorisch entlang T1 (in radialer Richtung) bewegt. Die beiden Führungskulissenabschnitte 32,33 sind dabei derart ausgebildet und derart angeordnet, dass das Gegengewicht 50 (gemäß dem Freiheitsgrad T1) entgegengesetzt zum Strahlbearbeitungskopf 3 bewegt wird.

Anhand der Fig. 9 bis 15 wird nun die Funktionsweise der Scheiben 24, 34 erläutert. Dabei zeigt jeweils der rechte Teil immer eine Ansicht von oben und damit die Lage der ersten Scheibe 24 und der linke Teil die korrespondierende Ansicht von unten und damit die zweite Scheibe 34.

Durch die voneinander unabhängigen Antriebe 20, 30 sind die Scheiben 24, 34, die um dieselbe Rotationsachse 11 drehbar sind, unabhängig voneinander antreibbar. Die relative Dreh-Position der Scheiben 24, 34 zueinander sowie deren absolute Dreh-Position relativ zur ersten Plattform 1 bzw. Basisplattform 19 definieren jeweils die Lage des Strahlbearbeitungskopfes 3 relativ zur Plattform 1 bzw. Basisplattform 19.

In der (willkürlich gewählten) Ausgangsposition von Fig. 9 befindet sich der Strahlbearbeitungskopf 3 in der Mitte, d.h. seine Strahlaustrittsachse 4 fällt mit der ersten Rotationsachse 11 zusammen.

In Fig. 10 wird nun die Plattform 2 zusammen mit dem Strahlbearbeitungskopf 3 gemäss dem translatorischen Freiheitsgrad T1 entlang der Linearführungseinrichtung 28 verschoben. Dabei bleibt die erste Scheibe 24 stationär, während die zweite Scheibe 34 (von unten gesehen im Uhrzeigersinn) gedreht wird, wodurch die zweite Plattform 2 über die im sich drehenden ersten bogenförmigen Kulissenführungsabschnitt 32 geführten Führungselemente 25, 26 in Richtung T1 gedrängt wird. Der Kulissenführungsabschnitt 32 stellt zwar eine Führung für die zweite Plattform 2 dar, gleichzeitig überträgt er seine Bewegung auf die zweite Plattform 2. Er ist somit Führung und Übertragungsmittel in einem.

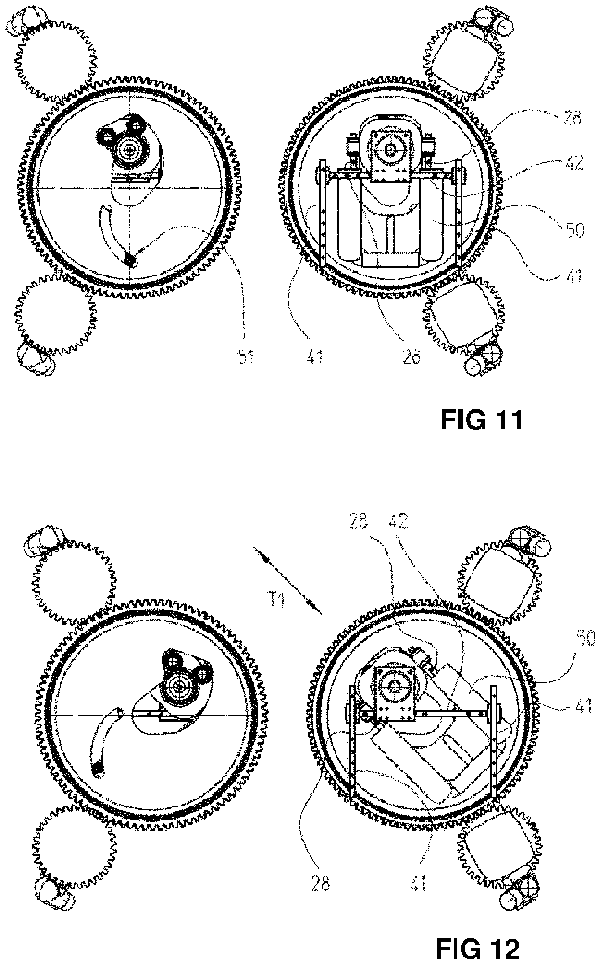

In Fig. 11 ist die zweite Plattform 2 am Ende des ersten Durchgangsöffnungsabschnittes 22 angelangt.

In Fig. 12 wird nun auch die erste Scheibe 24 durch den Antrieb 20 gedreht, um eine Bewegung des Strahlbearbeitungskopfes 3 gemäss dem rotatorischen Freiheitsgrad R1 zu erzielen. Die zweite Scheibe 34 dreht sich mit, verursacht aber keine Bewegung des Strahlbearbeitungskopfes 3 gemäss dem translatorischen Freiheitsgrad T1. Ebenfalls zu sehen ist aus Fig. 12, dass der Strahlbearbeitungskopf 3 durch die Verdrehsicherung 40 - umfassend die Linearführungen 41, 42 - gegenüber der ersten Plattform 1 bzw. der Basisplattform 19 nicht verdreht.

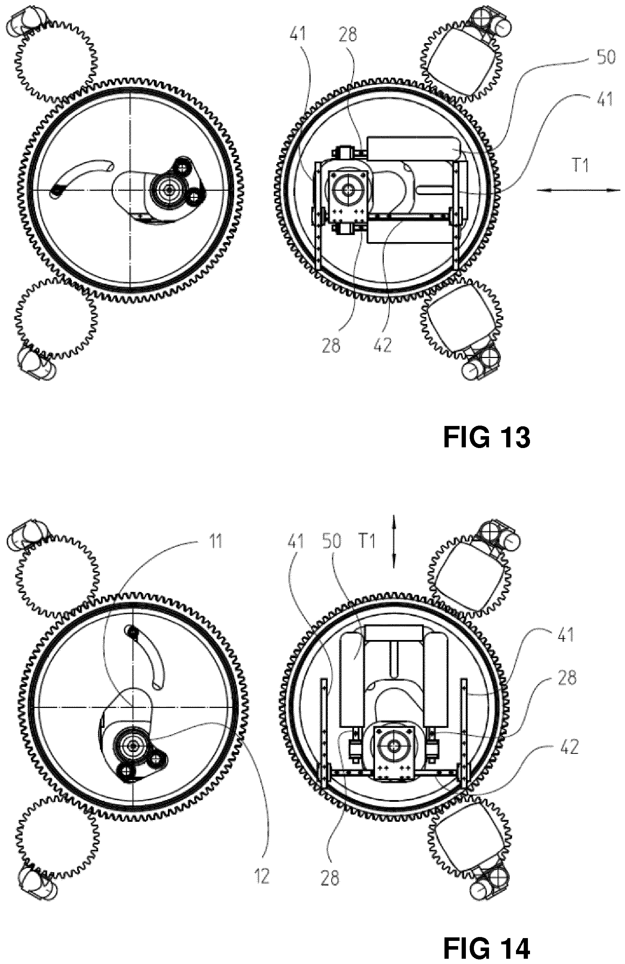

Fig. 13, 14 und 15 zeigen im Ablauf eine vollständige Drehung gemäss dem rotatorischen Freiheitsgrad R1 um die erste Rotationsachse 11. Wie daraus ersichtlich bleibt die Orientierung des Strahlbearbeitungskopfes 3 relativ zur ersten Plattform 1 unverändert.

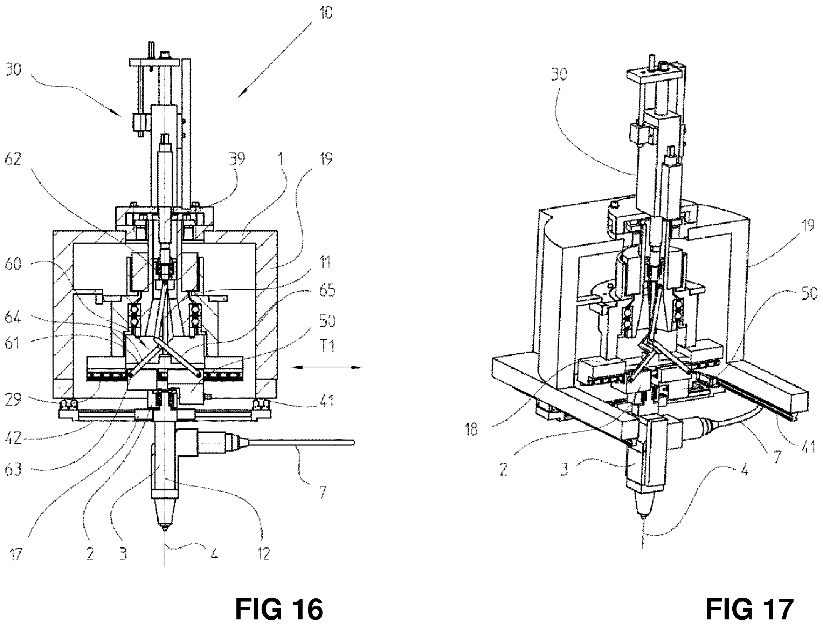

Anhand der Fig. 16 bis 21 wird nun eine zweite Ausführungsform der Erfindung beschrieben, wobei gleiche bzw. ähnliche Bauteile mit denselben Bezugszeichen beschrieben werden.

Die Bewegungseinheit 10 umfasst wieder eine Plattform 1 bzw. Basisplattform 19, in der die zweite Plattform 2 bewegbar angeordnet ist. Die in Fig. 2 dargestellte Zwischenplattform 18 ist in diesem Beispiel eine Linearführungseinrichtung 29, die relativ zur ersten Plattform 1 um die Rotationsachse 11 drehbar gelagert ist. Entlang der Linearführungseinrichtung 29 ist die zweite Plattform 2 zusammen mit dem Strahlbearbeitungskopf 3 verschiebbar. Diese Verschiebung entspricht dem translatorischen Freiheitsgrad T1.

Bewirkt wird diese Verschiebung durch den zweiten Antrieb 30, der nun ein Linearantrieb ist, dessen Linearachse 39 parallel zur ersten Rotationsachse 11 ist. Im dargestellten bevorzugten Ausführungsbeispiel fällt die Linearachse 39 des Linearantriebs mit der ersten Rotationsachse 11 zusammen. Der Linearantrieb kann z.B. eine Zylinder-Kolben-Einheit oder eine Zahnstange umfassen. Im dargestellten Beispiel mündet der zweite Antrieb 30 in einer Antriebsstange, die (von oben) auf einen Gelenksmechanismus 60 als zweites Übertragungsmittel wirkt.

Der Gelenkmechanismus 60 umfasst ein Übertragungselement 61, das mit seinem ersten Ende an der Antriebsstange (Anlenkpunkt 62) und mit seinem zweiten Ende an der zweiten Plattform 2 (Anlenkpunkt 63) angelenkt ist. Der Gelenkmechanismus 60 wandelt eine Bewegung entlang der ersten Rotationsachse 11 in eine Bewegung gemäss dem translatorischen Freiheitsgrad T1 entlang der Linearführungseinrichtung 29 um. Um eine platzsparende Konstruktion zu ermöglichen weist das Übertragungselement 61 zwischen den Anlenkpunkten 62, 63 eine bogenförmige oder geknickte Form auf.

Für den Fall, dass wie im dargestellten Beispiel ein Gegengewicht 50 vorgesehen ist, das ebenfalls entlang der Linearführungseinrichtung 29 verschiebbar ist, umfasst das Übertragungselement 61 des Gelenkmechanismus 60 zwei gegensinnig wirkende Zweige 64, 65, wobei der (durch das bereits erwähnte Übertragungselement 61 gebildete) erste Zweig 64 mit der zweiten Plattform 2 zusammenwirkt und ein (ähnlicher, aber kinematisch in entgegengesetzte Richtung wirkender) zweiter Zweig 65 mit dem Gegengewicht 50 zusammenwirkt.

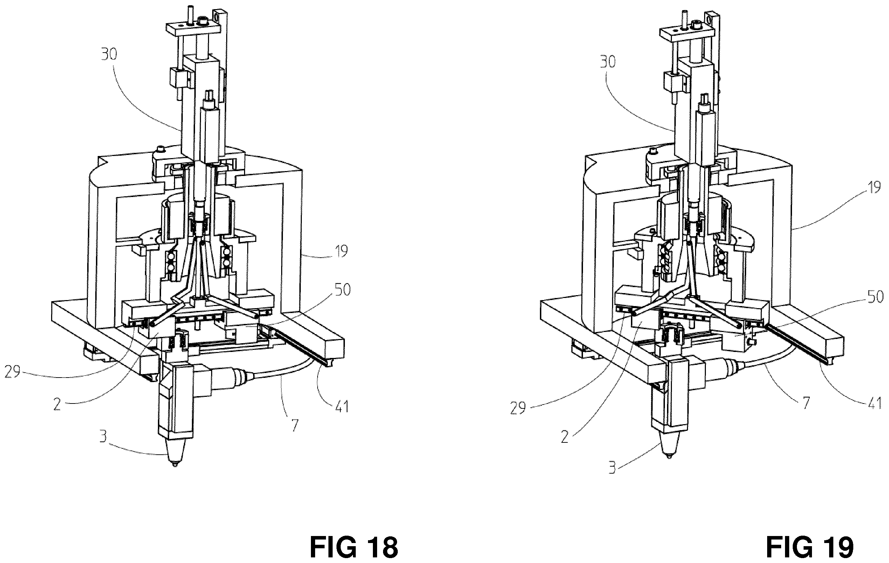

Fig. 17 zeigt in einem Ausschnitt eine mittige Lage des Strahlbearbeitungskopfes 3, während der Strahlbearbeitungskopf 3 in Fig. 18 nach aussen verfahren worden ist, indem die Antriebsstange nach unten drückt und den Gelenksmechanismus 60 nach aussen spreizt.

Fig. 19 zeigt nun eine Drehung der Linearführungseinrichtung 29 um die erste Rotationsachse 11. Dabei dreht sich der gesamte Gelenksmechanismus 60 mit. Dies wird dadurch ermöglicht, dass die Antriebsstange axial in der Rotationsachse 11 liegt. Am unteren Ende der Antriebsstange ist ein im Schnitt U-förmiges Element vorgesehen, das den Anlenkpunkt 62 trägt und über Lager relativ zur drehfest, jedoch in Längsachse verschieblich gelagerten Antriebsstange verdrehbar ist. Der Anlenkpunkt 62 ist demnach relativ zur Antriebsstange drehend gelagert.

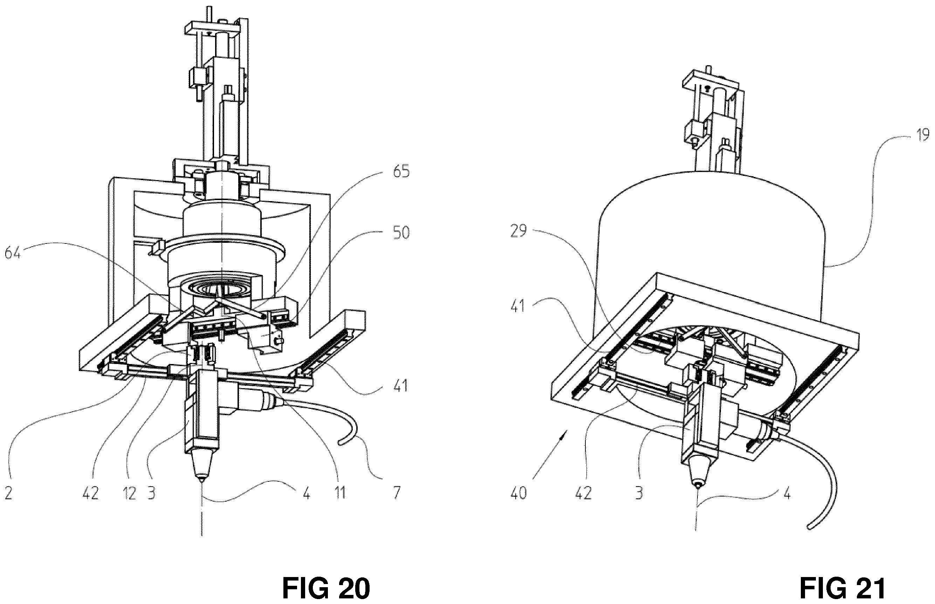

Wie aus den Fig. 20 und 21 zu sehen ist, umfasst die Bewegungseinheit 10 eine Verdrehsicherung 40, die analog zu jener aus dem ersten Beispiel aufgebaut ist, aber an der Unterseite der Bewegungseinheit 10 ausgebildet ist.

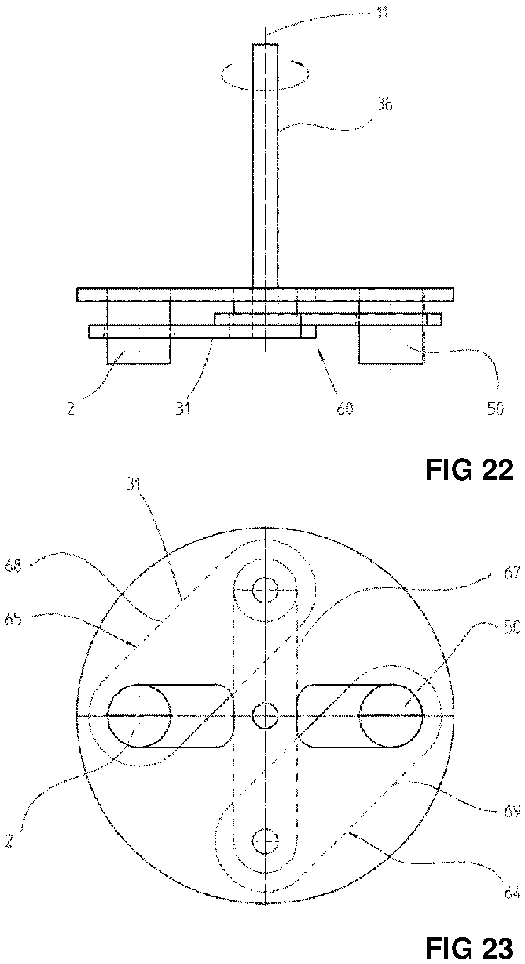

Fig. 22 und 23 zeigen das Prinzip einer leicht abgewandelten Ausführungsform, bei der (ein nicht näher dargestellter) zweiter Antrieb mit dem zweiten Übertragungsmittel 31 über ein Drehelement 38 zusammenwirkt, dessen Drehachse mit der ersten Rotationsachse 11 zusammenfällt. In Fig. 22 ist das Drehelement 38 eine Stange, deren Längsachse mit ihrer Drehachse zusammenfällt.

Der Gelenkmechanismus 60, der das Drehelement 38 mit der zweiten Plattform 2 verknüpft umfasst einen durch das Drehelement 38 verschwenkbaren Hebel 67, an dem zwei gegensinnig wirkende Übertragungselemente 68, 69 angelenkt sind. Eines der Übertragungselemente 68 ist an der zweiten Plattform 2 angelenkt, das andere Übertragungselement 69 am Gegengewicht 50.

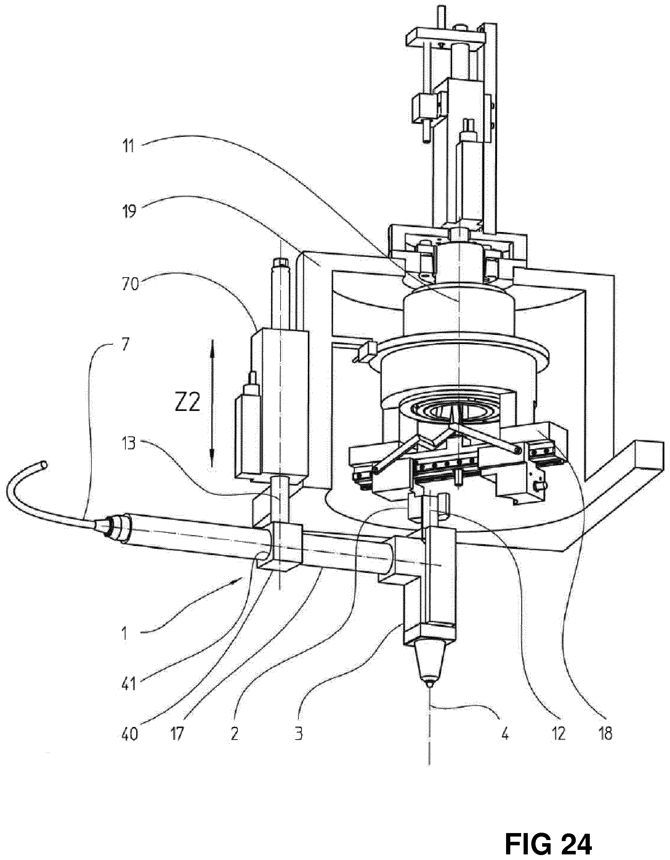

Fig. 24 zeigt eine weitere Ausführungsform der Erfindung, bei der im Gegensatz zu der Ausführungsform der Fig. 4 bis 15 nur ein Linearantrieb 70 zum Bewegen des Strahlbearbeitungskopfes 3 entlang der linearen Verschiebeachse Z2 vorgesehen ist. Der Linearantrieb 70 ist an der Basisplattform 19 angeordnet. Die Verdrehsicherung 40 ist hier anders ausgebildet und umfasst eine dritte Rotationsachse 13, die im Wesentlichen parallel zur Verschieberichtung Z2 steht. Die Zuleitung 7 verläuft innerhalb eines Führungselementes 17, das durch eine Linearführung 41 geführt ist. Die Linearführung 41 wiederum ist um die dritte Rotationsachse R3 drehbar und durch den Linearantrieb 70 entlang Z2 verschiebbar.

Hier umfasst die Verdrehsicherung 40 eine gesonderte Verbindungsstruktur, die den Strahlbearbeitungskopf 3 an die Basisplattform 19 anbindet. Die Verbindungsstruktur umfasst eine Linearführung 41, durch die der Strahlbearbeitungskopf 3 geführt ist. Die Linearführung 41 ist um eine dritte Rotationsachse 13, die im Wesentlichen parallel zur ersten Rotationsachse 11 und zur zweiten Rotationsachse 12 steht, aber von diesen beabstandet ist, drehbar gelagert. Durch diese Verdrehsicherung 40 wird eine Verdrehung des Strahlbearbeitungskopfes 3 relativ zur ersten Plattform 1 bzw. zur mit der ersten Plattform 1 drehfest verbundenen Basisplattform 19 um seine Strahlaustrittsachse 4 begrenzt. Diese Begrenzung verhindert, dass die Zuleitung 7 verwickelt wird.

Diese Ausführungsform zeichnet sich somit dadurch aus, dass die Verbindungsstruktur eine Linearführung 41 umfasst, die um eine dritte Rotationsachse 13 drehbar ist und durch die der Strahlbearbeitungskopf 3 im wesentlichen quer zur dritten Rotationsachse 13 geführt ist, wobei die dritte Rotationsachse 13 im wesentlichen parallel zur ersten Rotationsachse 11 aber von dieser beabstandet ist.

In einer bevorzugten Ausführungsform ist die Linearführung 41 über einen Linearantrieb 70 mit der Basisplattform 19 verbunden, wobei die Linearführung 41 durch den Linearantrieb 70 entlang einer linearen Verschiebeachse Z2, die im wesentlichen parallel zur dritten Rotationsachse 13 steht, bewegbar ist. Der Strahlbearbeitungskopf 3 ist hier zusätzlich in der zweiten Plattform 2 in Z-Richtung geführt.

Die Erfindung ist nicht auf die dargestellten Beispiele beschränkt. Eine Vielzahl ähnlicher, in kinematischer Hinsicht äquivalente Lösungen sind möglich.

### Bezugszeichenliste

- 1: erste Plattform
- 2: zweite Plattform
- 3: Strahlbearbeitungskopf
- 4: Strahlaustrittsachse
- 5: Werkstück
- 6: Werkstückauflage
- 7: Zuleitung
- 8: Grundgestell
- 9: Träger
- 10: Bewegungseinheit
- 11: erste Rotationsachse
- 12: zweite Rotationsachse
- 13: dritte Rotationsachse
- 14: Y-Schlitten für Bewegungseinheit 10
- 17: Führungselement
- 18: Zwischenplattform
- 19: Basisplattform
- 20: erster Antrieb
- 21: erstes Übertragungsmittel
- 22: erster Durchgangsöffnungsabschnitt
- 23: zweiter Durchgangsöffnungsabschnitt
- 24: erste Scheibe
- 25: Führungselement
- 26: Führungselement
- 27: erstes Ritzel
- 28: Linearführungseinrichtung
- 29: Linearführungseinrichtung
- 30: zweiter Antrieb
- 31: zweites Übertragungsmittel
- 32: erster bogenförmiger Kulissenführungsabschnitt
- 33: zweiter bogenförmiger Kulissenführungsabschnitt
- 34: zweite Scheibe
- 37: zweites Ritzel
- 38: Drehelement
- 39: Linearachse
- 40: Verdrehsicherung
- 41: erste Linearführung
- 42: zweite Linearführung
- 50: Gegengewicht
- 51: Führungselement
- 60: Gelenkmechanismus
- 61: Übertragungselement
- 62: Anlenkpunkt
- 63: Anlenkpunkt
- 64: erster Zweig
- 65: zweiter Zweig
- 67: Hebel
- 68: Übertragungselement
- 69: Übertragungselement
- 70: Linearantrieb
- 100: Strahlbearbeitungsvorrichtung
- R1: rotatorischer Freiheitsgrad
- R2: rotatorischer Freiheitsgrad
- T1: translatorischer Freiheitsgrad
- X: lineare Verschiebeachse
- Y: lineare Verschiebeachse
- Z1: lineare Verschiebeachse
- Z2: lineare Verschiebeachse

## Patentansprüche

1. Strahlbearbeitungsvorrichtung (100), insbesondere eine Laserstrahl-Bearbeitungsvorrichtung oder eine Fluidstrahl-Bearbeitungsvorrichtung, zur Bearbeitung eines Werkstückes (5) mit einem Strahl, mit einer ersten Plattform (1) und einer relativ zur ersten Plattform (1) bewegbaren zweiten Plattform (2), wobei die zweite Plattform (2) relativ zur ersten Plattform (1) einen rotatorischen Freiheitsgrad (R1) um eine erste Rotationsachse (11) aufweist, und mit einem Strahlbearbeitungskopf (3), der an der zweiten Plattform (2) gelagert ist, wobei durch den Strahlbearbeitungskopf (3) eine Strahlaustrittsachse (4) definiert wird, entlang der bei der Bearbeitung der Strahl austritt, wobei der Strahlbearbeitungskopf (3) relativ zur zweiten Plattform (2) einen rotatorischen Freiheitsgrad (R2) um eine zweite Rotationsachse (12) aufweist, die im Wesentlichen parallel zur ersten Rotationsachse (11) des rotatorischen Freiheitsgrades (R1) der zweiten Plattform (2) relativ zur ersten Plattform (1) ist und im Wesentlichen mit der Strahlaustrittsachse (4) zusammenfällt; wobei die Strahlbearbeitungsvorrichtung (100) eine Verdrehsicherung (40) für den Strahlbearbeitungskopf (3) umfasst, die eine Verdrehung des Strahlbearbeitungskopfes (3) relativ zur ersten Plattform (1) oder zu einer mit der ersten Plattform (1) drehfest verbundenen Basisplattform (19) um seine Strahlaustrittsachse (4) begrenzt und vorzugsweise vollständig verhindert, **dadurch gekennzeichnet, dass**
die zweite Plattform (2) zusätzlich zum rotatorischen Freiheitsgrad (R1) und/oder der Strahlbearbeitungskopf (3) zumindest einen translatorischen Freiheitsgrad (T1) relativ zur ersten Plattform (1) aufweist, der quer zur ersten Rotationsachse (11) des rotatorischen Freiheitsgrades (R1) verläuft, wobei die zweite Plattform zusammen mit dem Strahlbearbeitungskopf auf einer Zwischenplattform (18) translatorisch entlang einer Linearachse verschiebbar ist oder der Strahlbearbeitungskopf als solcher entlang der zweiten Plattform translatorisch entlang der Linearachse verschiebbar ist.

2. Strahlbearbeitungsvorrichtung nach Anspruch 1, **dadurch gekennzeichnet, dass** der rotatorische Freiheitsgrad (R2) des Strahlbearbeitungskopfes (3) relativ zur zweiten Plattform (2) ein passiver Freiheitsgrad ist.

3. Strahlbearbeitungsvorrichtung nach Anspruch 1 oder 2, wobei der translatorische Freiheitsgrad (T1) durch eine Linearführungseinrichtung (28, 29) verwirklicht ist, die um die erste Rotationsachse (11) drehbar ist.

4. Strahlbearbeitungsvorrichtung nach Anspruch 1, **dadurch gekennzeichnet, dass** die Verdrehsicherung (40) eine gesonderte Verbindungsstruktur umfasst, die den Strahlbearbeitungskopf (3) an die erste Plattform (1) oder an der mit der ersten Plattform (1) drehfest verbundene Basisplattform (19) anbindet.

5. Strahlbearbeitungsvorrichtung nach Anspruch 4, **dadurch gekennzeichnet, dass** die Verbindungsstruktur eine erste Linearführung (41) und eine zweite Linearführung (42) umfasst, die zueinander vorzugsweise im rechten Winkel geneigt sind, wobei die erste Linearführung (41) vorzugsweise auf der ersten Plattform (1) oder an der mit der ersten Plattform (1) drehfest verbundenen Basisplattform (19) angeordnet ist, die zweite Linearführung (42) entlang der ersten Linearführung (42) geführt ist und der Strahlbearbeitungskopf (3) entlang der zweiten Linearführung (42) geführt ist.

6. Strahlbearbeitungsvorrichtung nach Anspruch 5, **dadurch gekennzeichnet, dass** die Linearführung (41) um eine dritte Rotationsachse (13) drehbar ist und durch die der Strahlbearbeitungskopf (3) im Wesentlichen quer zur dritten Rotationsachse (13) geführt ist, wobei die dritte Rotationsachse (13) im Wesentlichen parallel zur ersten Rotationsachse (11) aber von dieser beabstandet ist.

7. Strahlbearbeitungsvorrichtung nach Anspruch 6, **dadurch gekennzeichnet, dass** die Linearführung (41) mit einem Linearantrieb (70) verbunden ist, wobei die Linearführung (41) durch den Linearantrieb (70) entlang einer linearen Verschiebeachse (Z2), die im Wesentlichen parallel zur dritten Rotationsachse (13) steht, bewegbar ist.

8. Strahlbearbeitungsvorrichtung nach einem der vorhergehenden Ansprüche, **dadurch gekennzeichnet, dass** die Strahlbearbeitungsvorrichtung (100) zum Ausgleich des Gewichtes der Strahlbearbeitungskopfes (3) ein Gegengewicht (50) aufweist, das vorteilhaft gemäss dem translatorischen Freiheitsgrad (T1) der zweiten Plattform (2) relativ zur ersten Plattform (1) jeweils in entgegengesetzte Richtung zur zweiten Plattform (2) bewegbar ist.

9. Strahlbearbeitungsvorrichtung nach einem der vorhergehenden Ansprüche, **dadurch gekennzeichnet, dass** die Strahlbearbeitungsvorrichtung (100) einen ersten, optional relativ zur ersten Plattform (1) stationären Antrieb (20), der über ein erstes Übertragungsmittel (21) mit der zweiten Plattform (2) zusammenwirkt, um eine Bewegung der zweiten Plattform (2) relativ zur ersten Plattform (1) entsprechend dem rotatorischen Freiheitsgrad (R1) zu bewirken, und einen zweiten, optional stationären Antrieb (30), der über ein zweites Übertragungsmittel (31) mit der zweiten Plattform (2) und/oder mit dem Strahlbearbeitungskopf (3) zusammenwirkt, um eine Bewegung der zweiten Plattform (2) und/oder des Strahlbearbeitungskopfes (3) relativ zur ersten Plattform (1) entsprechend dem translatorischen Freiheitsgrad (T1) zu bewirken, wobei vorzugsweise der erste Antrieb (20) und der zweite Antrieb (30) auf der ersten Plattform (1) oder auf der mit der ersten Plattform (1) drehfest verbundenen Basisplattform (19) angeordnet sind.

10. Strahlbearbeitungsvorrichtung nach Anspruch 9, **dadurch gekennzeichnet, dass** der erste Antrieb (20) und das erste Übertragungsmittel (21) und der zweite Antrieb (30) und das zweite Übertragungsmittel (31) zwei, in kinematischer Hinsicht zueinander parallele Antriebsstränge bilden, die jeweils mit der zweiten Plattform (2) und/oder dem Strahlbearbeitungskopf (3) zusammenwirken.

11. Strahlbearbeitungsvorrichtung nach Anspruch 9 oder 10, **dadurch gekennzeichnet, dass** das erste Übertragungsmittel (21) eine erste Scheibe (24) ist, die im Wesentlichen senkrecht zur ersten Rotationsachse (11) steht und um die erste Rotationsachse (11) rotierbar ist, wobei an der ersten Scheibe (24) die Linearführungseinrichtung (28) ausgebildet ist, durch die die zweite Plattform (2) entsprechend dem translatorischen Freiheitsgrad (T1) geführt ist, wobei vorzugsweise die Linearführungseinrichtung (28) zumindest eine Schiene umfasst.

12. Strahlbearbeitungsvorrichtung nach einem der Ansprüche 9 bis 11, **dadurch gekennzeichnet, dass** das zweite Übertragungsmittel (31) eine zweite Scheibe (34) ist, die im Wesentlichen senkrecht zur ersten Rotationsachse (11) steht und um die erste Rotationsachse (11) rotierbar ist, wobei in der zweiten Scheibe (34) zumindest ein erster bogenförmiger Kulissenführungsabschnitt (32) ausgebildet ist, durch den die zweite Plattform (2) geführt ist, wobei die Führung vorzugsweise dadurch erfolgt, dass der Strahlbearbeitungskopf (3) und/oder mindestens ein mit der zweiten Plattform (2) verbundenes Führungselement (25, 26) in den bogenförmigen Kulissenführungsabschnitt (32) ragt.

13. Strahlbearbeitungsvorrichtung nach Anspruch 11 oder 12, **dadurch gekennzeichnet, dass** der Strahlbearbeitungskopf (3) und/oder zumindest ein mit der zweiten Plattform (2) verbundenes Führungselement (25, 26) durch einen ersten Durchgangsöffnungsabschnitt (22) der ersten Scheibe (24) und durch den ersten bogenförmigen Kulissenführungsabschnitt (32) der zweiten Scheibe (34) ragt.

14. Strahlbearbeitungsvorrichtung nach einem der Ansprüche 9 bis 13, **dadurch gekennzeichnet, dass** das erste Übertragungsmittel (21) und/oder das zweite Übertragungsmittel (31) in Form einer Zahnradscheibe ausgebildet ist/sind.

15. Strahlbearbeitungsvorrichtung nach Anspruch 8 und 12 und optional zusätzlich nach einem der Ansprüche 13 bis 14, **dadurch gekennzeichnet, dass** das Gegengewicht (50) durch einen zweiten bogenförmigen Kulissenführungsabschnitt (33) der zweiten Scheibe (34) geführt und bewegt wird, wobei der zweite bogenförmige Kulissenführungsabschnitt (33) relativ zum ersten bogenförmigen Kulissenführungsabschnitt (32) gegensinnige Biegung aufweist.

16. Strahlbearbeitungsvorrichtung nach einem der Ansprüche 9 bis 15, **dadurch gekennzeichnet, dass** der zweite Antrieb (30) ein Linearantrieb ist, dessen Linearachse (39) parallel zur ersten Rotationsachse (11) ist, wobei vorzugsweise die Linearachse (39) des Linearantriebs mit der ersten Rotationsachse (11) zusammenfällt.

17. Strahlbearbeitungsvorrichtung nach einem der Ansprüche 9 bis 16, **dadurch gekennzeichnet, dass** der zweite Antrieb (30) mit dem zweiten Übertragungsmittel (31) über ein Drehelement (38) zusammenwirkt, dessen Drehachse mit der ersten Rotationsachse (11) zusammenfällt, wobei vorzugsweise das Drehelement (38) eine Stange ist, dessen Längsachse mit seiner Drehachse zusammenfällt.

18. Strahlbearbeitungsvorrichtung nach einem der Ansprüche 9 bis 17, **dadurch gekennzeichnet, dass** das zweite Übertragungsmittel (31) ein Gelenkmechanismus (60) ist, wobei der Gelenkmechanismus (60) vorzugsweise ein Übertragungselement (61) umfasst, das jeweils an der zweiten Plattform (2) und an der Linearachse (39) des Linearantriebes angelenkt ist, wobei vorzugsweise das Übertragungselement (61) zwischen den Anlenkpunkten (62, 63) eine bogenförmige oder geknickte Form aufweist.

19. Strahlbearbeitungsvorrichtung nach Anspruch 18, **dadurch gekennzeichnet, dass** der Gelenkmechanismus (60) zumindest einen Hebel umfasst.

20. Strahlbearbeitungsvorrichtung nach Anspruch 18 oder 19, **dadurch gekennzeichnet, dass** der Gelenkmechanismus (60) zwei gegensinnig wirkende Zweige (64, 65) umfasst, wobei ein erster Zweig (64) mit der zweiten Plattform (2) zusammenwirkt und ein zweiter Zweig (65) mit dem Gegengewicht (50) zusammenwirkt.

## Claims

1. A beam processing device (100), in particular a laser beam processing device or a fluid beam processing device, for processing a workpiece (5) with a beam, with a first platform (1) and a second platform (2) movable relative to the first platform (1), wherein the second platform (2) has a rotational degree of freedom (R1) about a first axis of rotation (11) relative to the first platform (1), and a beam processing head (3) mounted on the second platform (2), wherein the beam processing head (3) is defined by a beam exit axis (4) along which the beam exits during processing, wherein the beam processing head (3) has a rotational degree of freedom (R2) about a second axis of rotation (12) relative to the second platform (2), which axis of rotation is substantially parallel to the first axis of rotation (11) of the rotational degree of freedom (R1) of the second platform (2) relative to the first platform (1) and substantially coincides with the beam exit axis (4); wherein the beam processing device (100) comprises an anti-twist protection (40) for the beam processing head (3) which limits rotation of the beam processing head (3) relative to the first platform (1) or to a base platform (19) rotationally fixed to the first platform (1) about the beam exit axis (4) thereof, and preferably completely prevents said rotation, **characterised in that**
the second platform (2) has at least one translational degree of freedom (T1) relative to the first platform (1) in addition to the rotational degree of freedom (R1) and/or the beam processing head (3), which is transverse to the first axis of rotation (11) of the rotational degree of freedom (R1), wherein the second platform together with the beam processing head is translationally displaceable on an intermediate platform (18) along a linear axis or the beam processing head as such is translationally displaceable along the second platform along the linear axis.

2. The beam processing device according to claim 1, **characterised in that** the rotational degree of freedom (R2) of the beam processing head (3) relative to the second platform (2) is a passive degree of freedom.

3. The beam processing device according to claim 1 or 2, wherein the translational degree of freedom (T1) is realised by a linear guide device (28, 29) which is rotatable about the first rotation axis (11).

4. The beam processing device according to claim 1, **characterised in that** the anti-rotation protection (40) comprises a separate connection structure, which connects the beam processing head (3) to the first platform (1) or to the base platform (19) rotatably connected to the first platform (1).

5. The beam processing device according to claim 4, **characterised in that** the connecting structure comprises a first linear guide (41) and a second linear guide (42) which are preferably inclined at right angles to each other, wherein the first linear guide (41) is preferably arranged on the first platform (1) or arranged on the base platform (19) connected in a rotationally fixed manner to the first platform (1), the second linear guide (42) is guided along the first linear guide (42) and the beam processing head (3) is guided along the second linear guide (42).

6. The beam processing device according to claim 5, **characterised in that** the linear guide (41) is rotatable about a third axis of rotation (13) and is guided through the beam processing head (3) substantially transversely to the third axis of rotation (13), wherein the third axis of rotation (13) is substantially parallel to the first axis of rotation (11) but spaced apart therefrom.

7. The beam processing device according to claim 6, **characterised in that** the linear guide (41) is connected to a linear drive (70), wherein the linear guide (41) is movable by the linear drive (70) along a linear displacement axis (Z2), which is substantially parallel to the third axis of rotation (13).

8. The beam processing device according to one of the preceding claims, **characterised in that** the beam processing device (100) has a counterweight (50) for balancing the weight of the beam processing head (3), which counterweight is advantageously movable according to the translational degree of freedom (T1) of the second platform (2) relative to the first platform (1) respectively in the opposite direction to the second platform (2).

9. The beam processing device according to one of the preceding claims, **characterised in that** the beam processing device (100) has a first drive (20), which is optionally stationary relative to the first platform (1) and interacts with the second platform (2) via a first transmission means (21) to effect a movement of the second platform (2) relative to the first platform (1) in accordance with the rotational degree of freedom (R1), and a second, optionally stationary drive (30) which is connected to the second platform (2) via a second transmission means (31) and/or interacts with the beam processing head (3) to effect movement of the second platform (2) and/or the beam processing head (3) relative to the first platform (1) in accordance with the translational degree of freedom (T1), wherein the first drive (20) and the second drive (30) are preferably arranged on the first platform (1) or on the base platform (19) rotationally fixedly connected to the first platform (1).

10. The beam processing device according to claim 9, **characterised in that** the first drive (20) and the first transmission means (21) and the second drive (30) and the second transmission means (31) form two drive trains kinematically parallel to each other, each interacting with the second platform (2) and/or the beam processing head (3).

11. The beam processing device according to claim 9 or 10, **characterised in that** the first transmission means (21) is a first disc (24) which is substantially perpendicular to the first axis of rotation (11) and is rotatable about the first axis of rotation (11), wherein at the first disc (24), there is formed the linear guide device (28) through which the second platform (2) is guided according to the translational degree of freedom (T1), wherein the linear guide device (28) preferably comprises at least one rail.

12. The beam processing device according to any one of claims 9 through 11, **characterised in that** the second transmission means (31) is a second disc (34) which is substantially perpendicular to the first axis of rotation (11) and is rotatable about the first axis of rotation (11), wherein in the second disc (34), there is formed at least a first arcuate sliding block guide portion (32), through which the second platform (2) is guided, wherein the guiding preferably is such that the beam processing head (3) and/or at least one guide element (25, 26) connected with the second platform (2) protrudes into the arcuate sliding block guide portion (32).

13. The beam processing device according to claim 11 or 12, **characterised in that** the beam processing head (3) and/or at least one guide element (25, 26) connected with the second platform (2) protrudes through a first through-hole portion (22) of the first disc (24) and through the first arcuate sliding block guide portion (32) of the second disc (34).

14. The beam processing device according to one of claims 9 through 13, **characterised in that** the first transmission means (21) and/or the second transmission means (31) is/are formed in the form of a toothed wheel disc.

15. The beam processing device according to claim 8 and claim 12 and optionally additionally according to one of claims 13 through 14, **characterised in that** the counterweight (50) is guided and moved by a second arcuate sliding block guide portion (33) of the second disc (34), wherein the second arcuate sliding block guide portion (33) has an opposite direction of bending relative to the first arcuate sliding block guide portion (32).

16. The beam processing device according to one of claims 9 through 15, **characterised in that** the second drive (30) is a linear drive, the linear axis (39) of which is parallel to the first axis of rotation (11), wherein preferably the linear axis (39) of the linear drive coincides with the first axis of rotation (11).

17. The beam processing device according to one of claims 9 through 16, **characterised in that** the second drive (30) interacts with the second transmission means (31) via a rotary element (38), the axis of rotation of which coincides with the first axis of rotation (11), wherein the rotary element (38) is preferably a rod having a longitudinal axis which coincides with the axis of rotation thereof.

18. The beam processing device according to any one of claims 9 through 17, **characterised in that** the second transmission means (31) is a hinge mechanism (60), the hinge mechanism (60) preferably comprising a transmission element (61) respectively attached to the second platform (2) and being articulated on the linear axis (39) of the linear drive, wherein the transmission element (61) preferably has an arcuate or kinked shape between the articulation points (62, 63).

19. The beam processing device according to claim 18, **characterised in that** the hinge mechanism (60) comprises at least one lever.

20. The beam processing device according to claim 18 or 19, **characterised in that** the hinge mechanism (60) comprises two oppositely acting arms (64, 65), wherein a first arm (64) interacts with the second platform (2) and a second arm (65) interacts with the counterweight (50).

## Revendications

1. Dispositif d'usinage par jet (100), en particulier dispositif d'usinage par faisceau laser ou dispositif d'usinage par jet de fluide, destiné à traiter une pièce (5) avec un rayonnement, comprenant une première plateforme (1) et une seconde plateforme (2) mobile par rapport à la première plateforme (1), la seconde plateforme (2) ayant un degré de liberté en rotation (R1) autour d'un premier axe de rotation (11) par rapport à la première plateforme (1) et comprenant une tête d'usinage par jet (3) montée sur la seconde plateforme (2), un axe de sortie de rayonnement (4) étant défini par la tête d'usinage par jet (3), le long duquel le rayonnement sort pendant l'usinage, la tête d'usinage par jet (3) ayant, par rapport à la deuxième plateforme (2), un degré de liberté en rotation (R2) autour d'un deuxième axe de rotation (12) qui est essentiellement parallèle au premier axe de rotation (11) du degré de liberté en rotation (R1) de la seconde plateforme (2) par rapport à la première plateforme (1) et sensiblement coïncidant avec l'axe de sortie du rayonnement (4) ; le dispositif d'usinage par jet (100) comprenant un dispositif anti-rotation (40) pour la tête d'usinage par jet (3) qui limite et de préférence empêche totalement la rotation, autour de l'axe de sortie du jet (4), de la tête d'usinage par jet (3) par rapport à la première plateforme (1) ou à une plateforme de base (19) fixée de manière solidaire en rotation à la première plateforme (1), **caractérisé en ce que** la deuxième plateforme (2) présente, en plus du degré de liberté en rotation (R1), et/ou la tête d'usinage par jet (3) présente au moins un degré de liberté en translation (T1) par rapport à la première plateforme (1), qui est transversale au premier axe de rotation (11) du degré de liberté en rotation (R1), la seconde plateforme pouvant, en même temps que la tête d'usinage par jet, être déplacée en translation le long d'un axe linéaire sur une plateforme intermédiaire (18) peuvent ou la tête d'usinage par jet proprement dite pouvant être déplacée en translation le long de la seconde plateforme le long de l'axe linéaire.

2. Dispositif d'usinage par jet selon la revendication 1, **caractérisé en ce que** le degré de liberté en rotation (R2) de la tête d'usinage par jet (3) par rapport à la deuxième plateforme (2) est un degré de liberté passif.

3. Dispositif d'usinage par jet selon la revendication 1 ou 2, dans lequel le degré de liberté en translation (T1) est réalisé par un moyen de guidage linéaire (28, 29) qui peut tourner autour du premier axe de rotation (11).

4. Dispositif d'usinage par jet selon la revendication 1, **caractérisé en ce que** le dispositif anti-rotation (40) comprend une structure de liaison séparée qui relie la tête d'usinage par jet (3) à la première plateforme (1) ou à la plateforme de base (19) reliée de manière solidaire en rotation à la première plateforme (1).

5. Dispositif d'usinage par jet selon la revendication 4, **caractérisé en ce que** la structure de liaison comprend un premier guidage linéaire (41) et un deuxième guidage linéaire (42) qui sont de préférence inclinés à angle droit l'un par rapport à l'autre, le premier guidage linéaire (41) étant disposé de préférence sur la première plateforme (1) ou contre la plateforme de base (19) reliée de manière solidaire en rotation à la première plateforme (1), le deuxième guidage linéaire (42) étant guidé le long du premier guidage linéaire (42) et la tête d'usinage par jet (3) étant guidée le long du deuxième guidage linéaire (42).

6. Dispositif d'usinage par jet selon la revendication 5, **caractérisé en ce que** le guidage linéaire (41) peut tourner autour d'un troisième axe de rotation (13), grâce auquel la tête d'usinage par jet (3) est guidée sensiblement transversalement par rapport au troisième axe de rotation (13), le troisième axe de rotation (13) étant sensiblement parallèle au premier axe de rotation (11) mais espacé de celui-ci.

7. Dispositif d'usinage par jet selon la revendication 6, **caractérisé en ce que** le guidage linéaire (41) est relié à un entraînement linéaire (70), le guidage linéaire (41) étant mobile sous l'effet de l'entraînement linéaire (70) le long d'un axe de déplacement linéaire (Z2) pour ainsi dire parallèle au troisième axe de rotation (13).

8. Dispositif d'usinage par jet selon l'une des revendications précédentes, **caractérisé en ce que** le dispositif d'usinage par jet (100), pour équilibrer le poids de la tête d'usinage par jet (3), présente un contrepoids (50) qui, selon le degré de liberté en translation (T1) de la deuxième plateforme (2) par rapport à la première plateforme (1), est avantageusement mobile dans la direction respectivement opposée à la deuxième plateforme (2).

9. Dispositif d'usinage par jet selon l'une des revendications précédentes, **caractérisé en ce que** le dispositif d'usinage par jet (100) comporte un premier entraînement (20) éventuellement fixe par rapport à la première plateforme (1), qui interagit par l'intermédiaire d'un premier moyen de transmission (21) avec la deuxième plateforme (2), pour effectuer un mouvement de la deuxième plateforme (2) par rapport à la première plateforme (1) conformément au degré de liberté de rotation (R1), et un deuxième entraînement (30), éventuellement fixe, qui est relié à la deuxième plateforme (2) par l'intermédiaire d'un deuxième moyen de transmission (31) et/ou coopère avec la tête d'usinage par jet (3) pour provoquer un mouvement de la deuxième plateforme (2) et/ou de la tête d'usinage par jet (3) par rapport à la première plateforme (1) conformément au degré de liberté en translation (T1), de préférence le premier entraînement (20) et le deuxième entraînement (30) étant disposés sur la première plateforme (1) ou sur la plateforme de base (19) reliée de manière solidaire en rotation à la première plateforme (1).

10. Dispositif d'usinage par jet selon la revendication 9, **caractérisé en ce que** le premier entraînement (20) et le premier moyen de transmission (21) et le deuxième entraînement (30) et le deuxième moyen de transmission (31) forment deux trains d'entraînement parallèles l'un à l'autre d'un point de vue cinématique, qui coopèrent chacun avec la deuxième plateforme (2) et/ou avec la tête d'usinage par jet (3).

11. Dispositif d'usinage par jet selon la revendication 9 ou 10, **caractérisé en ce que** le premier moyen de transmission (21) est un premier disque (24) qui est sensiblement perpendiculaire au premier axe de rotation (11) et qui peut tourner autour du premier axe de rotation (11), le dispositif de guidage linéaire (28), à travers lequel la deuxième plateforme (2) est guidée selon le degré de liberté en translation (T1), étant formé contre premier disque (24), le dispositif de guidage linéaire (28) comprenant de préférence au moins un rail.

12. Dispositif d'usinage par jet selon l'une quelconque des revendications 9 à 11, **caractérisé en ce que** le deuxième moyen de transmission (31) est un deuxième disque (34) qui est sensiblement perpendiculaire au premier axe de rotation (11) et peut tourner autour du premier axe de rotation (11), au moins une première partie de guide de coulisse incurvée (32), à travers laquelle la deuxième plateforme (2) est guidée, étant formée dans le deuxième disque (34), le guidage ayant de préférence lieu de sorte que la tête d'usinage par jet (3) et/ou au moins un élément de guidage (25, 26) relié à la deuxième plateforme (2) fassent saillie dans la partie de guide de coulisse incurvée (32).

13. Dispositif d'usinage par jet selon la revendication 11 ou 12, **caractérisé en ce que** la tête d'usinage par jet (3) et/ou au moins un élément de guidage (25, 26) relié à la deuxième plateforme (2) font saillie à travers une première partie d'ouverture de passage (22) du premier disque (24) et à travers la première partie de guidage de coulisse incurvée (32) du second disque (34).

14. Dispositif d'usinage par jet selon l'une des revendications 9 à 13, **caractérisé en ce que** le premier moyen de transmission (21) et/ou le deuxième moyen de transmission (31) sont réalisés sous la forme d'un disque de roue dentée.

15. Dispositif d'usinage par jet selon les revendications 8 et 12 et éventuellement en plus selon l'une des revendications 13 à 14, **caractérisé en ce que** le contrepoids (50) est guidé et déplacé par une deuxième partie de guide de coulisse incurvée (33) du deuxième disque (34), la deuxième partie de guide de coulisse incurvée (33) présentant une courbure opposée à celle de la première partie de guide de coulisse incurvée (32).

16. Dispositif d'usinage par jet selon l'une des revendications 9 à 15, **caractérisé en ce que** le deuxième entraînement (30) est un entraînement linéaire, dont l'axe linéaire (39) est parallèle au premier axe de rotation (11), de préférence l'axe linéaire (39) de l'entraînement linéaire coïncidant avec le premier axe de rotation (11).

17. Dispositif d'usinage par jet selon l'une des revendications 9 à 16, **caractérisé en ce que** le deuxième entraînement (30) coopère avec le deuxième moyen de transmission (31) par l'intermédiaire d'un organe rotatif (38), dont l'axe de rotation coïncide avec le premier axe de rotation (11), de préférence l'organe rotatif (38) étant une tige dont l'axe longitudinal coïncide avec son axe de rotation.

18. Dispositif d'usinage par jet selon l'une des revendications 9 à 17, **caractérisé en ce que** le deuxième moyen de transmission (31) est un mécanisme articulé (60), le mécanisme articulé (60) comprenant de préférence un élément de transmission (61) articulé respectivement à la deuxième plateforme (2) et à l'axe linéaire (39) de l'entraînement linéaire, de préférence l'élément de transmission (61) ayant une forme arquée ou courbée entre les points d'articulation (62, 63).

19. Dispositif d'usinage par jet selon la revendication 18, **caractérisé en ce que** le mécanisme articulé (60) comprend au moins un levier.

20. Dispositif d'usinage par jet selon la revendication 18 ou 19, **caractérisé en ce que** le mécanisme articulé (60) comprend deux branches (64, 65) agissant de manière opposée, une première branche (64) coopérant avec la deuxième plateforme (2) et une seconde branche (65) coopérant avec le contrepoids (50).
